# EUROPÄISCHE PATENTSCHRIFT

(11) **EP 2 345 004 B1**
(45) Veröffentlichungstag und Bekanntmachung des Hinweises auf die Patenterteilung: **17.04.2013**
(21) Anmeldenummer: 09778670.1
(22) Anmeldetag: 23.09.2009
(51) Int. Cl.: G06T 7/00

(54) **VERFAHREN UND PRÜFSYSTEM ZUR OPTISCHEN PRÜFUNG EINER KONTUR EINES PRÜFOBJEKTS**
METHOD AND TEST SYSTEM FOR OPTICALLY TESTING A CONTOUR OF A TEST OBJECT
PROCÉDÉ ET SYSTÈME DE CONTRÔLE POUR RÉALISER UN CONTRÔLE OPTIQUE DU CONTOUR D'UN OBJET

(30) Priorität: 01.10.2008 DE 102008049859
(43) Veröffentlichungstag der Anmeldung: 20.07.2011
(73) Patentinhaber: Panasonic Electric Works Europe AG, 83607 Holzkirchen (DE)
(72) Erfinder: ESSER, Andreas, 83043 Bad Aibling (DE); OSTERMAIER, Philipp, 85646 Anzing (DE)
(74) Vertreter: Beckord, Klaus
(86) Internationale Anmeldenummer: PCT/EP2009/006869
(87) Internationale Veröffentlichungsnummer: WO 2010/037493

(56) Entgegenhaltungen:
- WO-A-2008/077680
- US-A- 4 731 858
- US-A1- 2006 182 333
- US-A1- 2007 071 308
- US-B2- 7 384 806

## Beschreibung

Die Erfindung betrifft ein Verfahren zur automatischen optischen Prüfung einer Kontur, insbesondere einer Kontur eines Prüfobjekts mit Hilfe eines zuvor erfassten Prüfbilds, welches zumindest die zu prüfende Kontur des jeweils aktuell zu prüfenden Prüfobjekts zeigt. Weiterhin betrifft die Erfindung ein Prüfsystem zur automatischen optischen Prüfung einer Kontur eines Prüfobjekts.

Mit zunehmender Automatisierung von Produktionsprozessen werden zur Prüfung der Zwischen- und/oder Endprodukte anstelle von visuellen Kontrollen durch Prüfpersonal mehr und mehr automatische optische Prüfverfahren eingesetzt. Die Prüfbilder werden mit Hilfe von Bildverarbeitungsverfahren ausgewertet und so auf mögliche Fehler untersucht.

Dabei gibt es Verfahren, die speziell dazu ausgebildet sind, die Oberfläche von bestimmten Strukturen zu prüfen. Ein Beispiel für eine Oberflächenprüfung wird in der US 2006/0182333 A1 beschrieben. In dieser Schrift wird vorgeschlagen, zur Fehlererkennung ein Bild der zu inspizierenden Oberfläche mit einer Vorlage zu vergleichen und so mögliche Defekte in der Oberfläche zu extrahieren. Anschließend erfolgt eine Bewertung der gefundenen Abweichungen hinsichtlich ihrer Fehlerrelevanz. Dabei werden für bestimmte Oberflächenbereiche unterschiedliche Kriterien zugrunde gelegt, wobei ein bestimmter Defekt, beispielsweise mit bestimmten Abmessungen, für einen Oberflächenbereich relvanter sein kann als für einen anderen Oberflächenbereich. Als Beispiel wird dort eine Leiterbahnprüfung beschrieben, wobei es für die Oberfläche einer Leiterbahn durchaus wesentlich ist, ob die Haupterstreckungsrichtung eines Defekts quer oder längs zur Leiterbahn liegt, da ja die engste Stelle die Leitfähigkeit der Leiterbahn begrenzt.

In der US 7,384,806 B1 wird ein Verfahren zur automatischen Defektcharakterisierung von Wafern im Rahmen einer Oberflächenprüfung vorgeschlagen, bei der ein Prüfbild und ein Referenzbild jeweils in einen Satz geometrischen Basis-Oberflächenmerkmale umgewandelt werden, wobei die Basis-Oberflächenmerkmale in den Bildern mittels eines Kantenerkennungsvefahrens detektiert werden. Es erfolgt dann ein Vergleich dieser beiden Sätze von Basis-Oberflächenmerkmalen. Auf Grundlage der dabei gefundenen Unterschiede wird die automatische Defektcharakterisierung durchgeführt.

In vielen Fällen ist aber die Prüfung von bestimmten Konturen des Prüfobjekts, beispielsweise einem inneren oder äußeren Begrenzungsrand des Prüfobjekts bzw. Teilen des Prüfobjekts oder von Grenzlinien zwischen bestimmten Komponenten oder Bestandteilen des Prüfobjekts, besonders wichtig. Ein typisches Beispiel hierfür ist die Kontrolle des dichten Abschlusses einer Vergussmasse in einer Gehäuseöffnung, beispielsweise in einem Relais oder anderen elektrischen oder elektronischen Bausteinen. Für eine solche automatische optische Prüfung werden mit Hilfe einer Kamera Prüfbilder der jeweils zu kontrollierenden Prüfobjekte gefertigt.

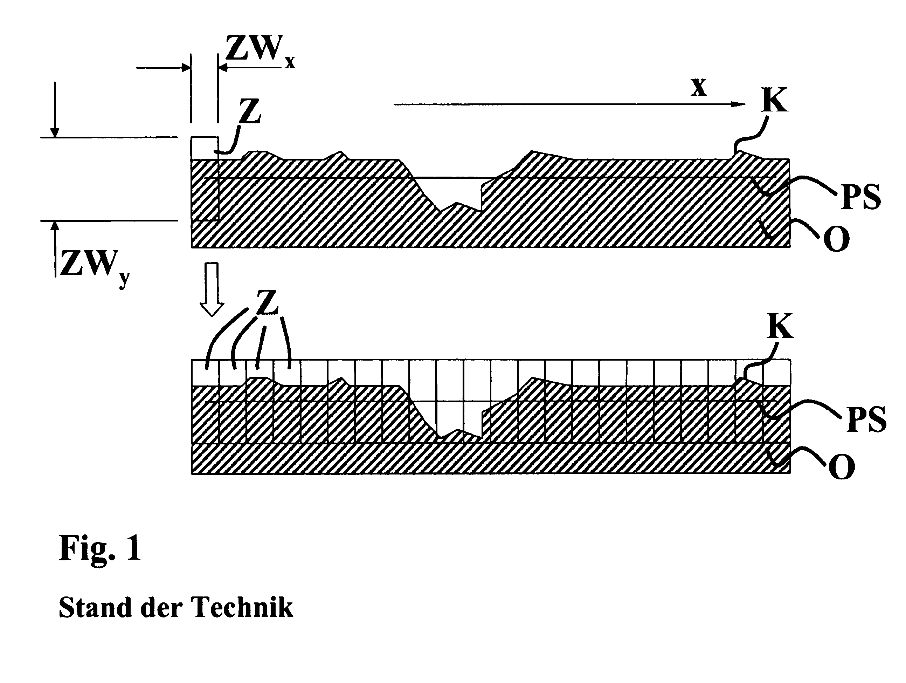

Bei einem in der Praxis bereits seit langem eingesetzten Konturprüfungsverfahren wird hierzu zunächst eine Prüfstrecke entlang der zu prüfenden Kontur gesetzt. Dies wird schematisch anhand der beiliegenden Figur 1 verdeutlicht. Gezeigt ist dort ein Teil eines Objekts O, dessen Außenkante eine bestimmte Kontur K aufweist. Diese Kontur K weist hier ungefähr in der Mitte des dargestellten Konturabschnitts einen Fehler in Form einer Ausnehmung auf. Die Prüfung entlang der festgelegten Prüfstrecke PS erfolgt dabei mit Hilfe von Prüfzellen Z, welche üblicherweise mehrere Bildpunkte bzw. Pixel umfassen. Hierzu wird während eines "Abscannens" der Kontur K entlang der Prüfstrecke PS, hier in einer Scanrichtung x, eine Reihe solcher Prüfzellen Z gesetzt. Der Bediener kann vorab nicht nur die Prüfstrecke PS selbst, sondern noch einige weitere Parameter für die Prüfung vorgeben, wie beispielsweise die Zellenbreite ZW_{X} der Zellen Z in der Scanrichtung x oder die Höhe ZW_{Y} der Prüfzellen Z senkrecht zur Scanrichtung x. Ebenso ist es möglich, die Anzahl der Prüfzellen Z auf der Prüfstrecke PS (welche eine bestimmte Länge aufweist) und/oder deren Dichte festlegen. Je nach Vorgaben der Zellenbreite ZW_{X} in x-Richtung bzw. der Zellendichte grenzen dann benachbarte Prüfungszellen Z, wie dies im unteren Teil der Figur dargestellt ist, aneinander oder überlappen sich. Die automatische Fehlererkennung erfolgt schließlich durch Ermittlung und Auswertung eines mittleren Grauwerts der einzelnen Zellen Z, d. h. eines über alle Pixel innerhalb einer Zelle gebildeten mittleren Intensitätswerts. Bei der Überprüfung können dann beispielsweise die mittleren Intensitätswerte mehrerer benachbarter Zellen auf Abweichungen untersucht und anhand dieser Abweichungen kann ein Fehler erkannt werden.

Es ist klar, dass für die Genauigkeit der Prüfung die Einstellungen der verschiedenen Parameter wie Zellenweite und -höhe, Dichte der Zellen etc. mitbestimmend sind. So sollte beispielsweise die Breite und Höhe der Prüfzellen Z vorzugsweise halb so groß eingestellt werden wie ein zu erwartender Fehler, der detektiert werden sollte. Ein weiterer wesentlicher Einstellparameter ist die Auswahl der Prüfstrecke PS. Die Lage der Prüfstrecke PS beeinflusst die Qualität der Fehlererkennung maßgeblich. Bei dem bisherigen Verfahren wird daher die Prüfstrecke von einem Bediener manuell mit Hilfe einer grafischen Benutzeroberfläche in einem Bild eines Referenz-Prüfobjekts gesetzt. Für die automatische Prüfung der weiteren Prüfobjekte erfolgt dann eine Übertragung dieser manuell gesetzten Prüfstrecken auf das jeweilige Prüfbild. Eine rechteckige Kontur wird dabei beispielsweise durch vier entlang der Kontur verlaufende einzelne Prüfstrecken überprüft. Neben geraden Prüfstrecken, wie sie in Figur 1 dargestellt sind, gibt es auch die Möglichkeit, gebogene Prüfstrecken festzulegen, um so z. B. kreisförmige Konturen zu überprüfen. Für eine Vielzahl von Prüfobjekten arbeitet dieses Verfahren sehr gut, jedoch eignet es sich nicht zur automatischen Prüfung von Konturen mit besonders problematischen Stellen wie beispielsweise spitzen Ecken. An derartigen Stellen neigt das Verfahren zu einer irrtümlichen Anzeige von Fehlern. Dies liegt daran, dass z. B. zur Prüfung einer Ecke eine Prüfstrecke ein Stück über die jeweilige Ecke hinausgesetzt werden müsste. Bei einer Anpassung einer so im Referenzbild gesetzten Referenz-Prüfstrecke auf das jeweils aktuell zu prüfende Prüfbild kommt es leicht zu (wenn auch geringfügigen) Abweichungen in der Länge der Prüfstrecke. In der Folge kann dies zu Änderungen in der Dichte und Lage der Prüfzellen relativ zur Referenzprüfung führen. Somit kann es von Prüfobjekt zu Prüfobjekt zu unterschiedlichen Messwerten kommen, die dann je nach Festlegung der Fehlergrenzen, d. h. der eingestellten Prüfungsempfindlichkeit, zu einer Falschanzeige von Fehlern führen kann.

Ein weiteres Prüfverfahren, welches mit Pixelgruppen, z. B. von 3 x 3 Pixeln, arbeitet, wird in der US 2007/0071308 A1 beschrieben.

Es ist eine Aufgabe der vorliegenden Erfindung, ein verbessertes und benutzerfreundlicheres Verfahren und ein entsprechendes Prüfsystem zur optischen Prüfung von Konturen eines Prüfobjekts zu schaffen, mit dem insbesondere auch eine automatische Prüfung von problematischeren Konturen wie Ecken, Zacken oder dergleichen möglich ist.

Diese Aufgabe wird durch ein Verfahren gemäß Patentanspruch 1 und durch ein Prüfsystem gemäß Patentanspruch 12 gelöst.

Im Rahmen des erfindungsgemäßen Verfahrens werden folgende Verfahrensschritte durchgeführt.

Es wird zunächst in üblicher Weise ein Prüfbild erfasst, welches zumindest die zu prüfende Kontur zeigt. Hierbei kann also ein Bild des Gesamtobjekts oder auch nur des die Kontur aufweisenden Teils des Gesamtobjekts verwendet werden.

Es wird dann innerhalb des Prüfbilds jeweils eine an die Kontur angepasste Prüfstrecke ermittelt. Wesentlich für die Erfindung ist dabei, dass die Prüfstrecke eine Anzahl von Prüfstreckenbereichen umfasst, die jeweils in definierte Prüfstreckenbereichsklassen gemäß vorgegebenen Klassifizierungsregeln klassifiziert sind. Das heißt, dass bestimmte Prüfstreckenbereiche in bestimmte Prüfstreckenbereichsklassen nach bestimmten Charakteristika einsortiert sind. Mögliche Klassifizierungsregeln werden nachfolgend noch näher erläutert. Es wird aber bereits jetzt darauf hingewiesen, dass die Prüfstreckenbereiche auch so definiert sein können, dass sie sich entlang der Prüfstrecke überlappen, d. h. dass Teile der Prüfstrecke zu verschiedenen Prüfstreckenbereichen gehören können.

Es erfolgt dann jeweils entlang der verschiedenen Prüfstreckenbereiche der Prüfstrecke eine Definition einer aus einer Anzahl von Prüfzellen bestehenden Prüfzellenstruktur sowie eine Ermittlung von Prüfparameterwerten für die einzelnen Prüfzellen gemäß für die jeweilige Prüfstreckenbereichsklasse vorgegebenen Prüfregeln. Die Prüfzellenstrukturen für die verschiedenen Prüfstreckenbereiche sollten dabei so gewählt sein, dass die zu prüfende Kontur durch die einzelnen Prüfzellenstrukturen abgedeckt ist. Die Prüfparameterwerte für die einzelnen Prüfzellen werden jeweils basierend auf Bildpunktwerten der von den Prüfzellen umfassten Bildpunkte ermittelt. Dabei können die Prüfparameterwerte vorzugsweise auf Basis der Intensitätsmittelwerte der Intensitätswerte der einzelnen Pixel der jeweiligen Prüfzelle ermittelt werden, wobei die Prüfparameter selber die Intensitätsmittelwerte darstellen oder aus den Intensitätsmittelwerten verschiedener, beispielsweise benachbarter oder sich überlappender Prüfzellen abgeleitet sein können. Außer Intensitätswerten können aber in identischer Weise auch andere Bildpunktwerte wie z. B. Farbwerte, Farbdifferenzwerte, Farbanteile etc. zur Bildung der Prüfparameter gewählt werden.

Schließlich erfolgt die Prüfung der Kontur entlang der einzelnen Prüfstreckenabschnitte auf Basis der Prüfparameterwerte der Prüfzellen gemäß für die jeweilige Prüfstreckenbereichsklasse vorgegebenen Prüfregeln. Beispielsweise können auf Basis der Prüfparameterwerte bestimmte Abweichungen von vorgegebenen Referenzwerten detektiert werden, wobei diese Referenzwerte absolut vorgegeben sein können und/oder an Referenzobjekten ermittelt wurden.

An dieser Stelle wird darauf hingewiesen, dass ein Anpassen der Prüfstrecke an die Kontur so zu verstehen ist, dass die Prüfstrecke in geeigneter Weise entlang der gewünschten Kontur verläuft, um die Prüfung mit Hilfe der Prüfzellen durchführen zu können. D.h. die Prüflinie muss hierzu nicht entlang der exakten Feinstruktur der Kontur verlaufen sondern es reicht in der Regel, wenn sie dem groben Verlauf der Kontur eines fehlerlosen Objekts folgt, wie z. B. die in Figur 1 gezeigte gerade Prüflinie zum Prüfen einer im Gesamtverlauf (makroskopisch betrachtet) geraden Objektkante.

Die Prüfregeln können für jede Prüfstreckenbereichsklasse unterschiedlich sein. Es können aber auch für mehrere Prüfstreckenbereichsklassen, beispielsweise für alle an einer bestimmten Kontur benötigten Prüfstreckenbereichsklassen, die gleichen Prüfregeln verwendet werden. Die genannten Prüfregeln können dabei wie oben erwähnt sowohl Regeln zur Definition der Prüfzellenstrukturen als auch Regeln zur Ermittlung von Prüfparameterwerten für die einzelnen Prüfzellen sowie Methoden zum Prüfen der Kontur auf Basis dieser Prüfparameterwerte umfassen.

Ein wesentlicher Vorteil des genannten Verfahrens besteht darin, dass einzelne Prüfstreckenbereiche entlang der an die Kontur angepassten Prüfstrecke separat nach unterschiedlichen Prüfregeln geprüft werden können und insbesondere auch eine individuelle Festlegung von Prüfzellenstrukturen nach den jeweils für die Prüfstreckenbereichsklasse vorgegebenen Prüfregeln erfolgen kann. Dies erlaubt eine individuelle Behandlung bestimmter Abschnitte entlang der zu prüfenden Kontur, so dass es insbesondere möglich ist, beispielsweise einfache Streckenabschnitte gemäß dem bisher bekannten Verfahren schnell und sicher zu prüfen und an den kritischen Stellen auf andere zuvor festgelegte Prüfregeln zurückzugreifen, um diese innerhalb des Verfahrens automatisch zu überprüfen. Dabei kann durch eine geschickte Wahl der Prüfregeln für den jeweiligen Typ der kritischen Konturabschnitte, d. h. die jeweilige Prüfstreckenbereichsklasse, in die der an den jeweiligen Konturabschnitt angepasste Prüfstreckenbereich einsortiert ist, dafür gesorgt werden, dass an jedem Konturabschnitt eine sichere Prüfung erfolgt. Auch bei schwierigen Prüfobjekten ist so eine vollautomatische genaue Prüfung der Konturen mit allenfalls geringen Falschmeldungen möglich.

Ein geeignetes Prüfsystem für eine solche automatische optische Prüfung einer Kontur eines Prüfobjekts benötigt zunächst wie üblich eine Bildsensoreinheit, beispielsweise eine Kamera, insbesondere CCD-Kamera, zur Erfassung eines Prüfbilds eines Prüfobjekts, welches zumindest die jeweils zu prüfende Kontur zeigt. Darüber hinaus benötigt das Prüfsystem eine Prüfstreckenermittlungseinheit zum Ermitteln einer an die Kontur angepasste Prüfstrecke innerhalb des Prüfbilds, wobei die Prüfstrecke eine Anzahl von Prüfstreckenbereichen umfasst, die jeweils in definierte Prüfstreckenbereichsklassen gemäß vorgegebener Klassifizierungsregeln klassifiziert sind, sowie eine Speichereinheit, in welcher für verschiedene Prüfstreckenbereichsklassen Prüfregeln hinterlegt sind. Weiterhin wird eine Prüfzellenermittlungseinheit zur Definition jeweils einer aus einer Anzahl von Prüfzellen bestehenden Prüfzellenstruktur entlang der Prüfstreckenbereiche der Prüfstrecke und zum Ermitteln von Prüfparameterwerten für die einzelnen Prüfzellen gemäß der für die jeweilige Prüfstreckenbereichsklasse vorgegebenen Prüfregeln sowie eine Prüfeinheit zum Prüfen der Kontur entlang der einzelnen Prüfstreckenbereiche auf Basis der Prüfparameterwerte der Prüfzellen gemäß für die jeweiligen Prüfstreckenbereichsklasse vorgegebenen Prüfregeln benötigt. Schließlich weist das Prüfsystem eine Ausgabeeinheit zur Ausgabe eines Prüfergebnisses auf. Bei der Ausgabeeinheit kann es sich beispielsweise um eine Anzeigeeinheit zur optischen und/oder akustischen Anzeige handeln, welche ein Signal ausgibt, wenn eine fehlerhafte Kontur detektiert wurde, oder um eine Steuersignalausgabeeinheit zur Ausgabe eines Steuersignals, welches dann in einer Anlage, in der die Prüfobjekte entlang des Prüfsystems transportiert werden, eine Sortiereinrichtung oder dergleichen ansteuert, so dass fehlerhafte Objekte automatisch aussortiert werden.

Die Prüfstreckenermittlungseinheit, die Prüfzellenermittlungseinheit und die Prüfeinheit können vorzugsweise zumindest zum Teil in Form von geeigneter Software realisiert sein. Dies ermöglicht eine einfache Nachrüstung bereits bestehender Prüfsysteme, welche bereits geeignete Bildsensoreinheiten und Speichereinheiten enthalten. Als Speichereinheit des Prüfsystems ist dabei im Übrigen jede geeignete Speichereinheit anzusehen, auf die das Prüfsystem Zugriff hat. Die Softwaremodule können beispielsweise auf einer geeigneten Rechnereinheit eines Prüfsystems implementiert sein, welche auch die benötigten Ansteuerungskomponenten für die Hardwarekomponenten, beispielsweise einen "Frame-Grabber" zum Auslesen der Bildsensoreinheit und zur Erstellung der benötigten Bilder sowie weitere Schnittstellen zur Bedienung des gesamten Prüfsystems und zur zusätzlichen Kontrolle der Prüfaufnahmen durch einen Bediener enthält. Die Erfindung wird daher auch durch ein Computerprogrammprodukt gelöst, welches direkt in einen Speicher einer programmierbaren Rechnereinheit eines Prüfsystems ladbar ist, mit Programmcodemitteln, um alle Schritte des erfindungsgemäßen Verfahrens auszuführen, wenn das Programm auf der Rechnereinheit ausgeführt wird.

Weitere besonders vorteilhafte Ausgestaltungen und Weiterbildungen der Erfindung ergeben sich insbesondere aus den abhängigen Ansprüchen sowie der nachfolgenden Beschreibung. Dabei kann das erfindungsgemäße Prüfsystem auch entsprechend den abhängigen Verfahrensansprüchen weitergebildet sein.

Für eine erfindungsgemäße Prüfung mehrerer gleichartiger Konturen bzw. der Konturen von mehreren gleichartigen Prüfobjekten wird vorzugsweise zunächst in einem Referenzbild, welches eine der zu prüfenden Kontur entsprechende (Referenz-)Kontur eines Referenz-Prüfobjekts zeigt, eine an die Kontur angepasste Referenz-Prüfstrecke ermittelt und analysiert. Bei dieser bevorzugten automatischen Analyse werden Prüfstreckenbereiche der Referenz-Prüfstrecke gemäß den vorgegebenen Klassifizierungsregeln in definierte Prüfstreckenbereichsklassen klassifiziert. Eine solche Analyse kann vorzugsweise automatisch erfolgen. Ein Verfahren hierfür wird nachfolgend noch näher erläutert. Bei der eigentlichen Prüfung der Konturen werden dann auf Basis der Referenz-Prüfstrecke zumindest Prüfstreckenbereiche der Prüfstrecke oder sogar die gesamte Prüfstrecke innerhalb des aktuellen Prüfbilds auf Basis der Referenz-Prüfstrecke ermittelt.

Ein für eine solche automatische Prüfstreckenklassifizierung geeignetes Prüfsystem benötigt eine Speichereinheit, in welcher für verschiedene Prüfstreckenbereichsklassen Klassifizierungsregeln hinterlegt sind, sowie eine Prüfstreckenklassifizierungseinheit, um eine an die Kontur angepasste Prüfstrecke zu analysieren und dabei Prüfstreckenbereiche der Prüfstrecke gemäß vorgegebener Klassifizierungsregeln in definierte Prüfstreckenbereichsklassen zu klassifizieren.

Alternativ oder zusätzlich können auch auf Basis einer entlang eines Prüfstreckenbereichs der Referenz-Prüfstrecke bereits vorab definierten Referenz-Prüfzellenstruktur jeweils Prüfzellenstrukturen entlang des entsprechenden Prüfstreckenbereichs der Prüfstrecke einer aktuell zu prüfenden Kontur definiert werden.

Bei dieser Ermittlung der Prüfstrecke und/oder der Prüfzellenstruktur auf Basis der Referenz-Prüfstrecke bzw. auf Basis einer zuvor definierten Referenz-Prüfzellenstruktur erfolgt vorzugsweise automatisch eine Anpassung der Referenz-Prüfstrecke bzw. der Referenz-Prüfzellenstruktur an die aktuelle Kontur. So kann es beispielsweise sein, dass durch unterschiedliche Positionierung des Prüfobjekts relativ zur Bildsensoreinheit die aktuell zu prüfende Kontur innerhalb des Prüfbilds an einer anderen Position liegt oder anders orientiert ist als die Referenz-Kontur innerhalb des Referenz-Prüfbilds. Ebenso kann die Kontur im Prüfbild gegenüber der Kontur im Referenz-Prüfbild vergrößert, verkleinert oder in irgendeiner anderen Weise leicht verzerrt sein. Daher können die Prüfstreckenbereiche der Referenz-Prüfstrecke bzw. die gesamte Referenz-Prüfstrecke und/oder die Referenz-Prüfzellenstruktur zur Anpassung an die aktuell zu prüfende Kontur innerhalb der Prüfaufnahme verschoben und/oder skaliert, d. h. beispielsweise vergrößert, verkleinert oder in sonstiger Weise leicht verzerrt werden.

Eine solche Anpassung kann dabei vorzugsweise mit Hilfe von in der Prüfaufnahme des aktuell zu prüfenden Prüfobjekts eindeutig identifizierbaren Referenzmerkmalen erfolgen. Hierbei kann es sich um gesetzte Marker, aber auch um signifikante, eindeutig erkennbare Strukturen des Objekts selbst, wie Ecken, Kanten etc. handeln, vorzugsweise aber um solche Strukturen, die keiner Prüfung bedürfen. Aus den Referenzmerkmalen können beispielsweise Referenzpunkte berechnet werden, deren Position am zu prüfenden Objekt exakt definiert ist. Es ist lediglich erforderlich, dass dem Referenz-Prüfobjekt ebenfalls die entsprechenden Referenzmerkmale bzw. Informationen über deren Lage und Orientierung, Größe und/oder Form zugeordnet sind.

Durch eine Erkennung der Referenzmerkmale im Referenz-Prüfbild und in dem aktuellen Prüfbild und eine Berechnung der Unterschiede zwischen den absoluten und relativen Lagen, Orientierungen, Größen und/oder Formen der Referenzmerkmale bzw. Positionen der Referenzpunkte lassen sich automatisch geeignete Transformationsregeln ermitteln, um die Referenz-Prüfstrecke bzw. die Referenz-Prüfzellenstrukturen durch eine entsprechende Skalierung, Verschiebung und/oder Orientierungs-änderung an den aktuellen Prüfvorgang anzupassen.

Auch bei der Definition der Prüfstrecken bzw. Prüfzellen ist eine unterschiedliche Behandlung unterschiedlicher Prüfstreckenbereiche bzw. Prüfstreckenbereichsklassen möglich. Beispielsweise können für einige Prüfstreckenbereiche lediglich die Referenz-Prüfstreckenbereiche aus einem Referenz-Prüfbild übernommen werden und es erfolgt dann eine individuelle automatische Festlegung der Prüfzellenstruktur anhand des so jeweils festgelegten Prüfstreckenbereichs für jedes einzelne Prüfobjekt. Dies bietet sich z. B. bei den auch in den bisherigen Verfahren schon automatisch festgelegten Prüfzellenstrukturen entlang von Geraden oder nur leicht gebogenen Abschnitten an. Für andere Prüfstreckenbereiche kann dagegen eine im Referenz-Prüfbild festgelegte Referenz-Prüfzellenstruktur komplett übernommen und an die jeweilige Prüfstreckenbereiche bzw. den Konturabschnitt des aktuellen Prüfbilds angepasst werden.

Sofern im Referenz-Prüfbild bereits Prüfstellenstrukturen definiert werden, werden besonders bevorzugt auf Basis von Prüfparameterwerten von Prüfzellen der Referenz-Prüfstellenstruktur auch schon Referenzwerte für eine spätere Prüfung einer Kontur von Prüfobjekten ermittelt. Diese Referenzwerte können beispielsweise dann genutzt werden, um individuelle Prüfregeln für bestimmte kritische Abschnitte der Kontur bzw. kritische Prüfstreckenbereiche festzulegen.

Wenn das Prüfsystem mit einer Referenz-Prüfstrecke bzw. Referenz-Prüfzellenstruktur arbeiten soll, so benötigt es eine Speichereinheit zur Speicherung von ermittelten Referenz-Prüfstreckenbereichen bzw. der Referenz-Prüfstrecke und/oder einer Referenz-Prüfzellenstruktur. Hierbei kann es sich um die gleiche Speichereinheit handeln, in der auch die Prüfregeln und Klassifizierungsregeln hinterlegt sind.

Ein solches Prüfsystem benötigt zudem eine Prüfstreckenermittlungseinheit, welche so ausgebildet ist, dass sie auf Basis einer Referenz-Prüfstrecke eine Prüfstrecke für eine zu prüfende Kontur innerhalb des Prüfbilds ermitteln kann, beispielsweise durch die besagte Anpassung der Referenz-Prüfstrecke bzw. der zugehörigen Prüfstreckenbereiche an die Kontur des Prüfbilds, sowie eine Prüfzellenermittlungseinheit, welche so ausgebildet ist, dass sie auf Basis einer entlang eines Prüfstreckenbereichs der Referenz-Prüfstrecke definierten Referenz-Prüfzellenstruktur eine Prüfzellenstruktur entlang eines Prüfstreckenbereichs der Prüfstrecke für eine aktuell zu prüfende Kontur festlegt bzw. anpasst. Dabei kann die Prüfstrecken-Ermittlungseinheit so ausgebildet sein, dass sie beispielsweise eine Prüfstreckenklassifizierungseinheit enthält und daher, je nach eingestelltem Modus, sowohl selbständig eine an die Kontur angepasste Prüfstrecke ermitteln und zur Klassifizierung der Prüfstreckenbereiche analysieren als auch die Referenz-Prüfstrecke anpassen kann. Ebenso kann auch die Prüfzellenermittlungseinheit so ausgebildet sein, dass sie sowohl beispielsweise für bestimmte Prüfstreckenbereiche Referenz-Prüfzellenstrukturen übernehmen kann als auch für andere Prüfstreckenbereiche selbständig Prüfzellenstrukturen definiert.

Bei einem besonders bevorzugten Verfahren zur automatischen Ermittlung einer Prüfstrecke oder Referenz-Prüfstrecke wird zunächst eine Kontur eines Prüfobjekts oder Referenz-Prüfobjekts aus dem Prüfbild oder Referenz-Prüfbild extrahiert. Dies kann mit üblichen Kantenextraktionsverfahren, z. B. einem Schwellenwertverfahren, Kantenverfolgungsverfahren, Gradientenbild-Auswertungsverfahren geschehen, je nachdem, um was für ein Prüfobjekt es sich handelt bzw. welche Bedingungen, insbesondere Beleuchtungsbedingungen, vorliegen. Diese Kontur wird dann in Konturabschnitte mit bestimmten charakteristischen Merkmalen, beispielsweise in Geraden, Kreisbogensegmente etc., aufgebrochen. Vorzugsweise erfolgt zuvor noch eine Glättung der Kontur.

Zum Aufbrechen der Kontur in Konturabschnitte mit bestimmten charakteristischen Merkmalen gibt es verschiedene Möglichkeiten. Vorzugsweise wird die Kontur zunächst mit einem Polygonapproximations-Verfahren durch einen Polygonzug angenähert. In einem weiteren Approximationsschritt werden dann Einzelpolygonabschnitte des Polygonzugs zur Bildung von Prüfstreckenabschnitten jeweils an einen dem betreffenden Polygonabschnitt zugeordneten Abschnitt der Kontur approximiert. Dabei müssen diese Prüfstreckenabschnitte nicht unbedingt identisch mit den späteren Prüfstreckenbereichen sein. So ist es durchaus möglich, dass ein Prüfstreckenbereich genau einem Prüfstreckenabschnitt entspricht. Es ist aber auch möglich, dass ein Prüfstreckenbereich nur einen Teil eines solchen Prüfstreckenabschnitts bildet oder mehrere solcher Prüfstreckenabschnitte bzw. Teile von solchen Prüfstreckenabschnitten umfasst, beispielsweise ein Prüfstreckenbereich den Übergang zwischen zwei Prüfstreckenabschnitten umfasst. Bei einem Aufbrechen der Kontur können beispielsweise auch benachbarte Prüfstreckenabschnitte entstehen, deren zueinander gewandte Enden nicht exakt aufeinander treffen, d. h. dass ein Sprung in der Prüfstrecke vorliegt. Auch diese Bereiche zählen dann zu den von der Prüfstrecke umfassten Prüfstreckenbereichen bzw. können Teile solcher Prüfstreckenbereiche sein.

Vorzugsweise erfolgt die Definition einer Prüfzellenstruktur oder Referenz-Prüfzellenstruktur an einem solchen Übergangsbereich zwischen zwei entlang der Kontur aufeinander folgenden Prüfstreckenabschnitten, deren zueinander gewandte Enden nicht aufeinander treffen, entlang einer Verbindungslinie, im einfachsten Fall entlang einer einfachen Geraden, zwischen den jeweiligen Enden der beiden Prüfstreckenabschnitte.

Wie bereits oben erläutert, können beliebige Prüfstreckenbereichsklassen definiert werden, in welche die Prüfstreckenbereiche einklassifiziert sind. Besonders bevorzugt bieten sich folgende Prüfstreckenbereichsklassen an:
1. Eine erste Prüfstreckenbereichsklasse für gerade Prüfstreckenabschnitte und gebogene Prüfstreckenabschnitte, deren Radius größer oder gleich einem vorgegebenen Grenzradius ist.
2. Eine zweite Prüfstreckenbereichsklasse für gebogene Prüfstreckenabschnitte, deren Radius kleiner dem vorgegebenen Grenzradius ist.
3. Eine dritte Prüfstreckenbereichsklasse für Prüfstreckenabschnitte, deren Länge kleiner oder gleich einer vorgegebenen Grenzlänge, beispielsweise dem Prüfzellendurchmesser, ist.
4. Eine vierte Prüfstreckenbereichsklasse für Prüfstreckenbereiche, an denen zwei Prüfstreckenabschnitte unter einem spitzen Winkel aufeinander treffen, dessen Betrag kleiner oder gleich einem vorgegebenen Grenzwinkel ist. Dabei ist es egal, ob es sich bei dem spitzen Winkel um einen Außen- oder Innenwinkel der Kontur handelt.
5. Eine fünfte Prüfstreckenbereichsklasse für Prüfstreckenbereiche in einem Übergangsbereich zwischen zwei entlang der Kontur aufeinander folgenden Prüfstreckenabschnitten, deren zueinander gewandte Enden einen Abstand voneinander aufweisen, der größer oder gleich einem vorgegebenen Grenzabstand ist. Das heißt, diese Klasse umfasst die vorbeschriebenen Sprünge in der Prüfstrecke. Vorzugsweise kann nicht nur eine fünfte Prüfstreckenbereichsklasse vorgesehen sein, sondern mehrere solcher Klassen für verschiedene Sprunggrößen. D. h. es werden verschiedene Grenzabstände festgelegt, und dementsprechend erfolgt eine Einklassifizierung in unterschiedliche Prüfstreckenbereichsklassen.

Abhängig davon, in welche Prüfstreckenbereichsklasse ein Prüfstreckenbereich fällt, können - wie bereits erläutert - die Zellenstrukturen unterschiedlich definiert werden. Besonders bevorzugt erfolgt für Prüfstreckenbereiche zumindest einer der Prüfstreckenbereichsklassen eine automatische Definition einer Prüfzellenstruktur gemäß einer ersten Prüfzellenstrukturierungsregel. Beispielsweise bietet es sich an, für die Prüfstreckenbereiche der oben genannten ersten Prüfstreckenbereichsklasse die Prüfzellen gemäß den bisher üblichen Verfahren automatisch während der Prüfung unmittelbar im Prüfbild festzulegen, wobei einfach nur die Anzahl und die Größe der Prüfzellen vorab festgelegt bzw. in einer Prüfregel hinterlegt werden. Für Prüfstreckenbereiche zumindest einer anderen Prüfstreckenbereichsklasse erfolgt dagegen eine automatische und/oder manuelle Definition einer Prüfzellenstruktur gemäß zumindest einer zweiten Prüfzellenstrukturierungsregel, beispielsweise mittels einer graphischen Benutzerschnittstelle. Eine solche Sonderbehandlung bietet sich beispielsweise für die o. g. Prüfstreckenbereichsklassen 2. bis 5. an, in die ja bestimmte kritische Stellen in der Prüfstrecke fallen. Eine solche automatische und/oder manuelle Definition gemäß den vorgegebenen Prüfzellenstrukturierungsregeln kann dann vorzugsweise bereits innerhalb eines Referenz-Prüfbilds, d. h. entlang des betreffenden Prüfstreckenbereichs der Referenz-Prüfstrecke, erfolgen und es wird dann diese Referenz-Prüfzellenstruktur in das jeweilige Prüfbild übernommen und ggf. angepasst.

Vorzugsweise wird eine an einem Ende eines Prüfstreckenabschnitts bzw. am Ende einer Prüfstrecke liegende Prüfzelle so definiert, dass das betreffende Ende des Prüfstreckenabschnitts bzw. der gesamten Prüfstrecke genau auf einem Rand der Prüfzelle liegt. Dies gilt insbesondere auch bei den automatisch gesetzten Prüfzellenstrukturen. Wie aus Figur 1 deutlich wird, wurden bei dem bisherigen Verfahren die Prüfzellen immer so gesetzt, dass ihr Mittelpunkt am Ende der Prüfstrecke liegt. Dies führt dazu, dass das Ende der Prüfstrecke vom Bediener möglichst genau so gelegt werden muss, dass es ein Stück vor dem Ende der zu prüfenden Kontur endet, so dass die Prüfzelle in der Scan-Richtung nicht über den Rand der zu prüfenden Kontur hinausragt, da dies zu Fehlern führen würde. Wird bei einer automatischen Definition einer Prüfzellenstruktur dafür gesorgt, dass der Rand der äußersten Prüfzelle direkt auf dem Ende des jeweiligen Prüfstreckenabschnitts liegt, so kann auch der jeweilige Prüfstreckenabschnitt direkt bis an den Rand der Kontur bzw. den Rand des Objekts herangeführt werden oder automatisch eine entsprechende Prüfstrecke erzeugt werden, die bis zum Rand geht. Dies erleichtert das korrekte Setzen der Prüfstrecke erheblich.

Weiterhin werden bevorzugt bei zwei entlang der Prüfstrecke aneinander angrenzenden oder sich überlappenden Prüfstreckenbereichen die Prüfzellenstruktur und/oder die Referenz-Prüfzellenstruktur zumindest eines der beiden Prüfstreckenbereiche so definiert, dass sie den anderen Prüfstreckenbereich zumindest teilweise überdecken. So kann eine nahtlose Prüfung der gesamten Kontur sichergestellt werden. Ein solcher Prüfzellenstruktur-Überlapp zwischen benachbarten Prüfstreckenbereichen kann z. B. dadurch erfolgen, dass einige Prüfzellen so gelegt werden, dass sie in den Nachbar-Prüfstreckenbereich hineinragen oder ganz im Nachbar-Prüfstreckenbereich liegen. Dies hat den Vorteil, dass dann die Prüfzellen von geraden Abschnitten, die vorzugsweise automatisch gesetzt werden sollen, besser an die aktuelle exakte Länge des jeweiligen Prüfstreckenabschnitts angepasst werden können. Prinzipiell ist es aber auch möglich, Prüfzellen aus benachbarten Prüfzellenstrukturen doppelt zu verwenden, d. h. zwei Prüfzellenstrukturen zuzuordnen und jeweils bei der Prüfung der einzelnen Prüfstreckenbereiche einzusetzen.

Bei einem ganz besonders bevorzugten Ausführungsbeispiel sind die Prüfzellen jeweils so ausgebildet, dass sie im Wesentlichen, d. h. soweit dies im Rahmen der Bildauflösung aufgrund der einzelnen Pixel des Bildes möglich ist, eine Kreisform oder zumindest im Wesentlichen eine einen Kreis annähernde konvexe Polygonform mit mindestens fünf Ecken aufweisen. Bei einer solchen Kreisform bzw. einen Kreis annähernden konvexen Polygonform mit mindestens fünf Ecken ist sichergestellt, dass der Prüfzellendurchmesser in mehreren quer zueinander stehenden Richtungen in etwa gleich ist. Die Verwendung solcher kreisförmigen oder "quasi-kreisförmigen" Prüfzellen hat mehrere Vorteile. So wird weniger Rechenleistung bei Objekten mit bogenförmigen Konturen benötigt als bei Verwendung der üblichen rechteckige Zellen. Dies liegt darin, dass bei rechteckigen Zellen die kompletten Koordinaten, d. h. nicht nur die Position, sondern auch die Orientierung der Rechteckzelle aufwändig berechnet und gespeichert werden müssen. Bei einer kreisförmigen oder "quasi-kreisförmigen" Prüfzelle reicht es aus, den Mittelpunkt und den Radius bzw. Durchmesser festzulegen, da die Ausrichtung wegen der Rotationssymmetrie bzw. zumindest angenäherten Rotationssymmetrie nicht mehr so wesentlich ist wie bei rechteckigen Zellen. Ein weiterer Vorteil besteht darin, dass bestimmte Fehler mit kreisförmigen bzw. "quasi-kreisförmigen" Zellen erheblich besser als mit rechteckigen Prüfzellen erkannt werden können. Zwar ist bei Fehlern, die selber eine im Wesentlichen rechteckige Form aufweisen, die Erkennung mit Hilfe von kreisförmigen bzw. "quasi-kreisförmigen" Zellen minimal schlechter, was aber nicht signifikant auffällt. Jedoch ist bei eher abgerundeten Fehlern die Fehlererkennung mit kreisförmigen bzw. "quasi-kreisförmigen" Zellen erheblich besser. Dabei ist es so, dass die Fehlererkennung besser wird, je stärker die Zellenform an eine echte Kreisform angenähert ist, so dass dementsprechend eine möglichst weitgehende Kreisform - soweit sie bei der gegebenen Bildauflösung möglich ist - bevorzugt ist.

Um dies zu erreichen, wird bei einer bevorzugten Variante das Referenz-Prüfbild oder das Prüfbild, in dem die Prüfzellenstruktur definiert werden soll, zunächst vergrößert. Beispielsweise wird bei einer Vergrößerung um einen Faktor n jeder Pixel durch ein Feld von n x n Pixel ersetzt, wobei im einfachsten Fall die Pixel den gleichen Bildpunktwert enthalten wie der ursprüngliche Pixel. Ebenso ist natürlich ein Interpolationsverfahren möglich. In diesem vergrößerten Bild wird dann die Prüfzelle gesetzt. Somit ist eine Definition der Prüfzelle im Subpixelbereich möglich und es kann die Genauigkeit des gesamten Prüfverfahrens verbessert werden.

Die Erfindung wird im Folgenden unter Hinweis auf die beigefügten Figuren anhand von Ausführungsbeispielen noch einmal näher erläutert. Hieraus ergeben sich weitere Einzelheiten und Vorteile der Erfindung. Es zeigen:
- Figur 1: eine schematische Darstellung zur Erläuterung eines Kontur-Prüfverfahrens gemäß dem Stand der Technik,
- Figur 2: ein Flussdiagramm zur Erläuterung eines möglichen Ablaufs einer besonders bevorzugten Variante des erfindungsgemäßen Prüfverfahrens,
- Figur 3: eine schematische Darstellung eines Teils eines Prüfobjekts mit einer an der Kante extrahierten Kontur,
- Figur 4: die extrahierte Kontur gemäß Figur 3 nach einem Aufbrechen in Konturabschnitte,
- Figur 5: eine schematische Darstellung zur Erläuterung einer Prüfung einer Kontur gemäß dem erfindungsgemäßen Verfahren entlang einem Prüfstreckenbereich, welcher in eine erste Prüfstreckenbereichsklasse fällt,
- Figur 6: eine schematische Darstellung eines Konturabschnitts und eines daran angepassten Prüfstreckenbereichs, welcher in eine zweite Prüfstreckenbereichsklasse fällt, sowie eine hierfür definierte Prüfzellenstruktur,
- Figur 7: eine schematische Darstellung eines Konturabschnitts und eines daran angepassten Prüfstreckenbereichs, welcher in eine dritte Prüfstreckenbereichsklasse fällt, sowie eine hierfür definierte Prüfzellenstruktur,
- Figur 8: eine schematische Darstellung eines Konturabschnitts und eines daran angepassten Prüfstreckenbereichs, welcher in eine vierte Prüfstreckenbereichsklasse fällt, sowie eine hierfür definierte Prüfzellenstruktur,
- Figur 9a: eine schematische Darstellung eines Konturabschnitts und eines daran angepassten Prüfstreckenbereichs, welcher in eine fünfte Prüfstreckenbereichsklasse fällt, sowie eine hierfür definierte Prüfzellenstruktur,
- Figur 9b: eine schematische Darstellung einer weiteren Prüfzellenstruktur für einen Prüfstreckenbereich, welcher in eine fünfte Prüfstreckenbereichsklasse fällt,
- Figur 9c: eine schematische Darstellung einer weiteren Prüfzellenstruktur für einen Prüfstreckenbereich, welcher in eine fünfte Prüfstreckenbereichsklasse fällt,
- Figur 10a: ein Teil eines Prüfobjekts mit einer Kante mit spitzwinkliger Kontur und einer über den durch die Spitze gebildeten kritischen Prüfstreckenbereich gelegten Prüfzellenstruktur,
- Figur 10b: das Prüfobjektteil gemäß Figur 10a, jedoch mit entlang den geraden Seitenkanten verlaufenden Prüfstreckenbereichen und Prüfzellenstrukturen,
- Figur 10c: das Prüfobjektteil gemäß den Figuren 10a und 10b, wobei die Prüfzellenstrukturen gemäß den Figuren 10a und 10b überlagert sind,
- Figur 11: eine Darstellung eines vergrößerten Ausschnitts eines Prüfobjekts mit einer darin definierten Prüfzelle,
- Figur 12: ein vereinfachtes Blockschaltbild eines erfindungsgemäßen Prüfsystems mit einem grob schematisch dargestellten Prüfobjekt.

Anhand von Figur 1 wurde bereits eingangs ein aus der Praxis bekanntes Verfahren zur Prüfung von Konturen beschrieben, welches ebenfalls mit einer Anordnung von Prüfzellen Z entlang einer Prüfstrecke PS arbeitet, wobei jedoch rechteckige Prüfzellen Z eingesetzt werden und so eine automatische Prüfung entlang gerader oder nicht zu stark gekrümmter Prüfstrecken möglich ist. Bei dem nachfolgend beschriebenen Ausführungsbeispiel der Erfindung wird dagegen zum einen mit besonders vorteilhaften kreisförmigen (bzw. fast kreisförmigen) Prüfzellen PZ gearbeitet und zum anderen ein besonders bevorzugtes Verfahren eingesetzt, um auf einfache Weise auch kompliziertere Prüfstreckenbereiche wie Ecken oder Kanten automatisch sicher zu prüfen..

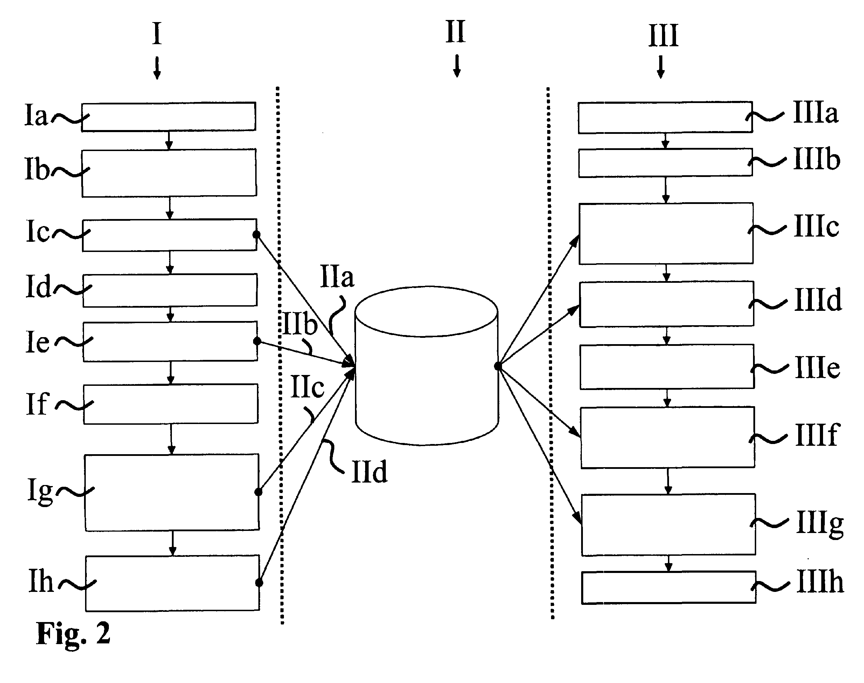

Figur 2 zeigt einen Verfahrensablauf zur Durchführung des besonders bevorzugten Prüfverfahrens. In Figur 2 sind dabei in der ganz linken Spalte I die Verfahrensschritte beim Einlernen eines Prüfvorgangs, d. h. eine Aufnahme eines Referenz-Prüfbilds und eine Festlegung von Prüfstrecken bzw. Prüfstreckenbereichen und ggf. Prüfzellenstrukturen anhand des Referenz-Prüfbilds, gezeigt. In der mittleren Spalte II ist dargestellt, welche bei dem Einlernvorgang gemäß Spalte I in den einzelnen Verfahrensschritten erzeugten bzw. gewonnenen Daten zur Verwendung in der späteren Prüfung gespeichert werden. In der ganz rechten Spalte III ist dann der eigentliche Prüfvorgang bei der Prüfung einer Kontur eines aktuellen Prüfobjekts dargestellt, wobei durch die Pfeile zwischen der Spalte II und der Spalte III dargestellt ist, wann welche Daten wieder aus dem Speicher ausgelesen werden.

Das Einlernverfahren beginnt zunächst im Verfahrensschritt Ia mit der Aufnahme eines Prüfbilds eines Referenz-Prüfobjekts. Es wird dann im Verfahrensschritt Ib der zu prüfende Bereich im Bild ausgewählt, d. h. es wird beispielsweise manuell von einem Benutzer mit einer geeigneten Benutzerschnittstelle ein Bereich im Referenz-Prüfbild gewählt, welcher die zu prüfende Kontur umfasst.

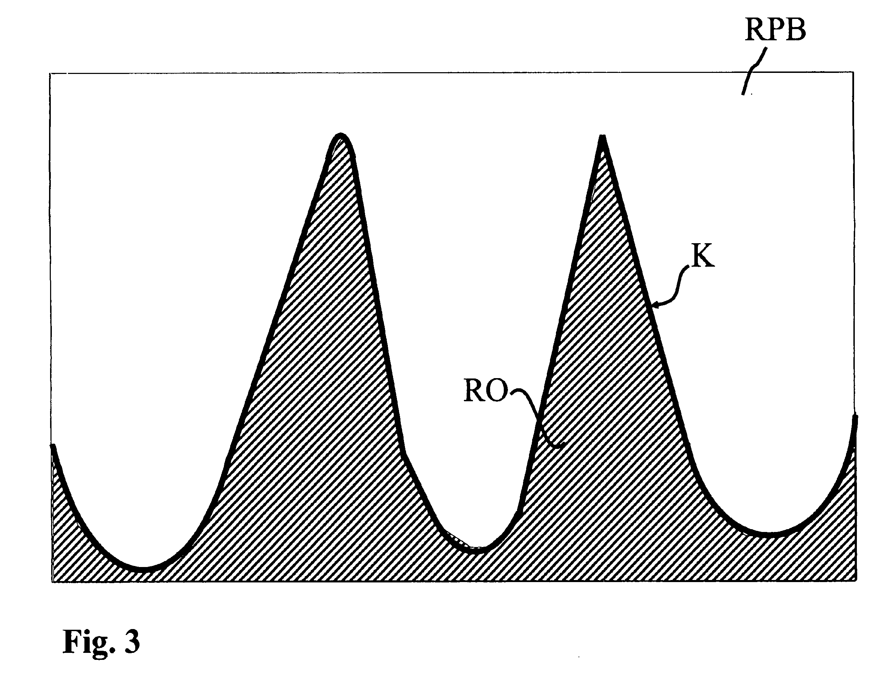

Im Verfahrensschritt Ic wird dann diese Kontur extrahiert. Dies ist in Figur 3 schematisch dargestellt. Gezeigt ist hier vergrößert in einem Referenzprüfbild RPB ein kleiner Ausschnitt eines sägezahnförmigen Referenz-Prüfobjekts RO, dessen Sägezahnkante genau geprüft werden soll. Dabei ist bereits eine extrahierte Kontur K, d. h. eine Pixelfolge, die die Konturdaten angibt, eingezeichnet. Die Extraktion einer solchen Kontur K kann mit den üblichen Verfahren, beispielsweise einem Schwellenwertverfahren, einem Kantenverfolgungsverfahren etc., durchgeführt werden. Eine Glättung oder Segmentierung des Bilds zur Extrahierung der Kontur kann beispielsweise unter Verwendung morphologischer Operatoren, wie den sogenannten Opening- und Closing-Operatoren, Dilatations-, Erosions- und Skelettierungsoperatoren, erfolgen. Solche morphologischen Operatoren sind dem Fachmann aus der Bildverarbeitung allgemein bekannt. Die relevanten Daten der Kontur K, wie der Konturverlauf und die Position und Lage der Kontur K, werden im Verfahrensschritt IIa in einem Speicher hinterlegt.

Es wird an dieser Stelle darauf hingewiesen, dass im Folgenden das Verfahren anhand von einfachen Grauwertbildern dargestellt wird. Grundsätzlich ist es aber auch möglich, das Verfahren nicht nur für Grauwertbilder, sondern auch für Farbbilder zu verwenden, wobei es insbesondere auch möglich ist, eine Farbprüfung von Objekten durchzuführen.

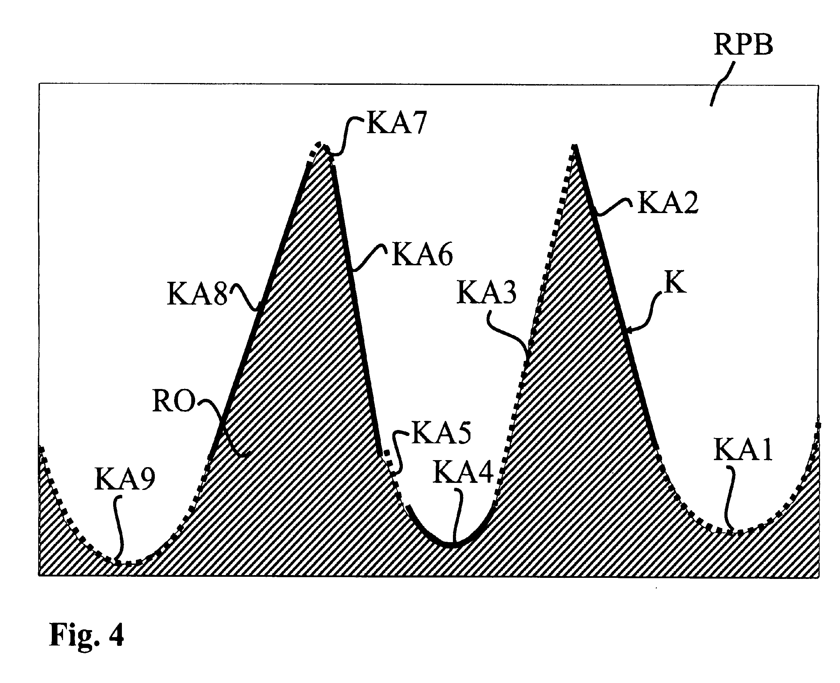

Die so ermittelte, sehr exakt an die Außenkanten des Objekts angepasste Kontur wird dann mit einem Polygonapproximations-Verfahren durch einen Polygonzug angenähert. Ein typisches Polygonapproximations-Verfahren, was sich hierfür eignet, ist der sog. Ramer-Algorithmus. Hierzu gibt es bereits fertige Programmmodule, die eine Kontur durch einen Polygonzug approximieren können, beispielsweise das von der Fa. MVtec. Solche Programme werden bisher für Radiusmessungen oder Abstandsmessungen eingesetzt. Dieses Verfahren führt aber zwangsläufig dazu, dass gerade bestimmte kritische Abschnitte der Kontur, beispielsweise die Spitzen der Sägezahnstruktur, nicht ganz exakt angepasst werden. Daher werden in einem weiteren Approximationsschritt einzelne Polygonabschnitte des Polygonzugs zur Bildung von Prüfstreckenabschnitten jeweils an einen dem betreffenden Polygonabschnitt zugeordneten Abschnitt der Kontur genauer approximiert: Dabei erfolgt die weitere Approximation unabhängig von den benachbarten Abschnitten (d. h. die Positionen der Enden des betreffenden Abschnitts werden nicht mehr festgehalten), wodurch die Kontur aufgebrochen wird. So kann es beispielsweise an einigen Stellen zu einem Versatz der Kurventeilstücke zueinander kommen. Figur 4 zeigt eine derart in Prüfstreckenabschnitte aufgebrochene Kontur mit mehreren Konturabschnitten KA1, KA2, KA3, KA4, KA5, KA6, KA7, KA8, KA9. Dabei ist beispielsweise zwischen dem Konturabschnitt KA5 und dem Konturabschnitt KA6 ein solcher Versatz zu erkennen. Solche Lücken zwischen den Konturabschnitten KA1, KA2, KA3, KA4, KA5, KA6, KA7, KA8, KA9 werden später ebenso wie bestimmte andere problematische Stellen in der Kontur K bei der Prüfung gesondert behandelt. Dies wird noch nachfolgend erläutert.

Dieses Aufbrechen der Kontur K in einfache geometrische Konturabschnitte wie Kreisbögen und -linien erfolgt im Verfahrensschritt le. Die geometrischen Konturabschnitte bzw. die zur Beschreibung dieser Objekte nötigen Forminformationen der Linien, Kreisbögen sowie ihre Position, Lage und Größe werden im Verfahrensschritt IIb in einem Speicher hinterlegt. In diesem Zusammenhang kann bereits eine erste Klassifizierungsregel angewandt werden, nach der einfache geometrischen Konturabschnitte, nämlich Geraden und nur leicht gekrümmte Kurvenabschnitte (oberhalb eines bestimmten Grenzradius) in eine erste Prüfstreckenbereichsklasse einsortiert werden können, für die die noch später erläuterte automatische Prüfung analog dem eingangs erwähnten herkömmlichen Scan-Verfahren durchgeführt werden kann.

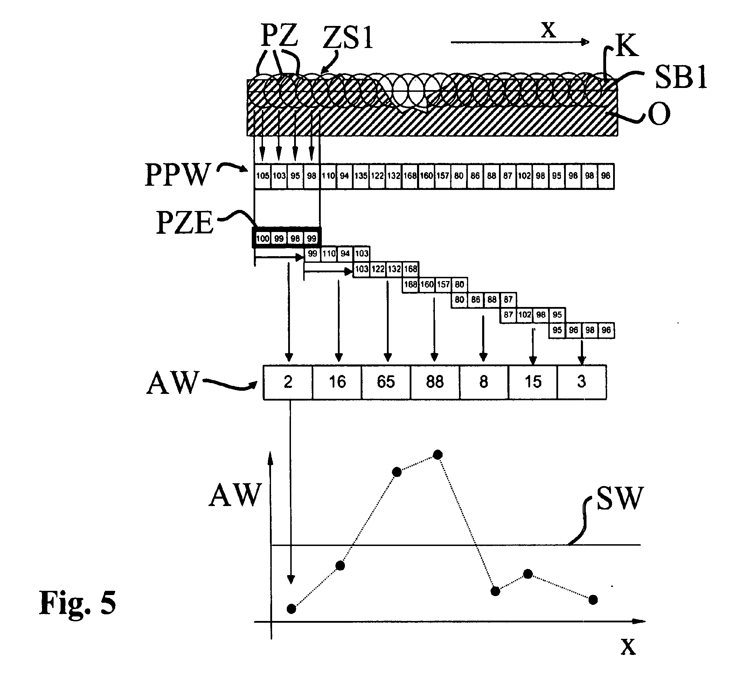

Im Verfahrensschritt If erfolgt eine gesonderte Prüfung, ob die Übergänge zwischen den einzelnen Konturabschnitten sprunghaft oder fließend sind. Wird ein solcher sprunghafter Übergang zwischen zwei Konturabschnitten festgestellt, werden die benachbarten Konturabschnitte im Verfahrensschritt Ig durch eine vorzugsweise gerade Linie zwischen den gegenüberliegenden Enden der Konturabschnitte zu einer Prüfstrecke vereint. Die Konturabschnitte und die ggf. eingefügten Verbindungslinien bilden dann die Prüfstreckenbereiche. Die gesamte Prüfstrecke umfasst also letztendlich die ermittelten Konturabschnitten KA1, KA2, KA3, KA4, KA5, KA6, KA7, KA8, KA9, welche jeweils einzelne Prüfstreckenabschnitte bilden können, und die eingefügten Verbindungslinien. In diesem Verfahrensschritt Ig erfolgt auch gleichzeitig eine Klassifizierung verschiedener Prüfstreckenbereiche in bestimmte Prüfstreckenbereichsklassen gemäß vorab festgelegten Klassifizierungsregeln. D. h. es werden beispielsweise sprunghafte Übergänge zwischen den einzelnen Prüfstreckenabschnitten bzw. Konturabschnitten als besonders zu prüfende Prüfstreckenbereiche klassifiziert, ebenso wie Prüfstreckenbereiche, welche andere besonders markante Stellen entlang der Prüfstrecke enthalten, z. B. wenn zwei Prüfstreckenabschnitte in einem spitzen Winkel aufeinander stoßen. Verschiedene mögliche Prüfstreckenbereichsklassen bzw. Typen von besonders markanten Prüfstreckenbereichen werden nachfolgend anhand der Figuren 5 bis 8c erläutert. Besonders gerade oder nur leicht gekrümmte Prüfstreckenabschnitte, d. h. die Prüfstreckenbereiche, welche durch die im Verfahrensschritt Ie ermittelten Konturabschnitte gebildet werden, wurden ja bereits in eine gesonderte Prüfstreckenbereichsklasse einsortiert, da diese keiner gesonderten Behandlung unterliegen müssen. Die im Verfahrensschritt 1g gewonnenen Daten über die komplette Prüfstrecke und die Klassifizierung der Prüfstreckenbereiche werden im Schritt IIc gespeichert.

Im Verfahrensschritt Ih werden dann für alle Prüfstreckenbereiche, welche in Prüfstreckenbereichsklassen fallen, die besonders markanten Übergängen zwischen Prüfstreckenabschnitten entsprechen bzw. selber besonders markante Prüfstellenabschnitte sind, gemäß bestimmten Prüfregeln mit einer Prüfzellenstruktur versehen und für diese ggf. schon bestimmte Referenzwerte RW für die spätere Prüfung anhand von Prüfparameterwerten der Prüfzelle ermittelt. Im Verfahrensschritt IId werden diese Referenzwerte RW ebenso wie Informationen über die Prüfzellenstruktur an den betreffenden markanten Übergängen hinterlegt. Zu den dort hinterlegten Daten zählt insbesondere auch die Zellengeometrie, zu deren Definition bei einer kreisrunden Zelle der Radius sowie die jeweilige Position des Mittelpunkts ausreichen.

Bei der späteren Prüfung (siehe Spalte III in Figur 2) wird zunächst im Verfahrensschritt IIIa ein Prüfbild PB aufgenommen. Auch hier wird ggf. der zu prüfende Bereich im Verfahrensschritt IIIb ausgewählt, wobei dies automatisch erfolgen kann. Im Schritt IIIc wird dann die gespeicherte Kontur mit einem automatischen Verfahren im Prüfbild PB gesucht und ihre Position, Lage und Größenabweichung im Verhältnis zu dem im Verfahrensschritt IIIa im Speicher hinterlegten Kontur-Verlauf des Referenz-Prüfobjekts bestimmt. Die Positions-, Lage- und Größenabweichung können dann genutzt werden, um im Verfahrensschritt IIId aus dem Speicher die im Verfahrensschritt IIIb hinterlegten einfachen geometrischen Prüfstreckenabschnitte bzw. die dort hinterlegten Forminformationen und Informationen über die Position, Lage und Größe dieser geometrischen Objekte zu nutzen und bezüglich ihrer Position, Lage und Größe an die Kontur im aktuellen Prüfbild anzupassen.

Im Verfahrensschritt IIIe können dann zunächst die durch die einzelnen einfachen geometrischen Prüfstreckenabschnitte gebildeten Prüfstreckenbereiche, welche in die erste Prüfstreckenbereichsklasse fallen, automatisch geprüft werden.

Eine solche automatische Prüfung wird anhand von Figur 5 erläutert, in der analog zu Figur 1 ein Teil eines Prüfobjekts O mit einer Kontur K dargestellt ist. Hierbei wird der Prüfstreckenabschnitt SB1 entlang der Kontur K in einer Scan-Richtung x mit Prüfzellen PZ belegt, welche sich jeweils um ein bestimmtes Maß überlappen. Dabei werden möglichst kreisrunde Prüfzellen PZ verwendet. Während der Prüfung wird also eine Prüfzellenstruktur ZS1 mit lauter äquidistanten, kreisförmigen Prüfzellen PZ entlang des Prüfstreckenbereichs SB aufgebaut. Für jede dieser Prüfzellen PZ wird dann ein mittlerer Grauwert als Prüfparameterwert PPW ermittelt. Bei einem mittleren Grauwert bzw. mittleren Intensitätswert handelt es sich einfach um den Mittelwert aller Intensitätswerte der einzelnen in die Prüfzelle PZ fallenden Bildpixel. Diese Ausgangs-Prüfparameterwerte PPW sind direkt in der Zeile unterhalb der Darstellung der Prüfzellenstruktur ZS1 in Figur 5 beispielhaft aufgeführt. Wie dort ebenfalls dargestellt ist, werden im vorliegenden Fall jeweils vier benachbarte Prüfzellen PZ zu Prüfzelleneinheiten PZE zusammengefasst, wobei sich zwei benachbarte Prüfzelleneinheiten PZE jeweils genau um eine Prüfzelle PZ überlappen, d. h. die Prüfzelleneinheiten PZG werden mit einem Vorschub von drei Prüfzellen PZ in Scan-Richtung x verschoben. Für jede Prüfzelleneinheit PZE wird dann ein maximaler mittlerer Intensitätsabweichungswert AW ermittelt, d. h. es wird die Differenz des maximalen Intensitätsmittelwerts PPW und des minimalen Intensitätsmittelwerts PPW der Prüfzellen PZ der jeweiligen Prüfzelleneinheit PZE ermittelt. Dies ergibt die Werte in der dritten Zeile. Diese Intensitätsabweichungswerte AW werden dann mit einem Schwellenwert SW verglichen, was in dem Diagramm unten in Figur 5 dargestellt ist. Liegt der Intensitätsabweichungswert AW einer Prüfzelleneinheit oberhalb des vorgegebenen Schwellenwerts, so wird dies als Fehler detektiert. Liegt der Intensitätsabweichungswert AW unterhalb des Schwellenwerts, so ist dieser Bereich der Kontur in Ordnung.

Die Größe der Prüfzellen PZ, die Anzahl der Prüfzellen PZ auf dem Prüfstreckenbereich SB1 bzw. die Dichte der Prüfzellen PZ und somit deren Überlapp, die Anzahl der Prüfzellen PZ innerhalb einer Prüfzelleneinheit PZE sowie der Prüfzellenvorschub und der Schwellenwert SW können u. a. als Prüfregeln beispielsweise von einem Bediener zuvor eingestellt und an die jeweilige Prüfaufgabe bzw. die gewünschte Empfindlichkeit der Fehlerprüfung angepasst werden.

Es ist hier zu bemerken, dass die endseitigen Prüfzellen PZ jeweils so gesetzt werden, dass ihre Kanten exakt auf dem Ende des Prüfstreckenbereichs SB1 liegen. Das heißt, dass bei einer automatischen Festlegung der Prüfstrecke solche Prüfstreckenbereiche SB1 auch direkt bis an eine Ecke des Objekts herangeführt werden können, ohne dass es dadurch zu falsch erkannten Fehlermeldungen kommt, dass Prüfzellen unbeabsichtigt in Scan-Richtung x seitlich über die Kontur K hinausragen.

Wie bereits eingangs erläutert, arbeitet ein solches Prüfverfahren sehr gut, wenn damit ein möglichst gerader oder leicht gebogener Prüfstreckenbereich abgefahren wird. Dieses Verfahren ist jedoch nicht so gut für Prüfstreckenbereiche mit besonders markanten Strukturen geeignet, welche deshalb hier bereits im Einlernvorgang in andere Prüfstreckenbereichsklassen einsortiert wurden. Für diese anderen Prüfstreckenbereiche wurden ja schon im Verfahrensschritt Ih extra separate Prüfzellenstrukturen ermittelt und im Verfahrensschritt IIc in einem Speicher hinterlegt. Diese Prüfzellenstrukturen werden nun im Verfahrensschritt IIIf wieder aus dem Speicher ausgelesen und an die entsprechenden markanten Prüfstreckenbereiche der Prüfstrecke im aktuell zu prüfenden Prüfbild angepasst, wobei die Position und Lage dieser einzelnen Prüfzellen, vorzugsweise aber nicht deren Größe, angepasst werden.

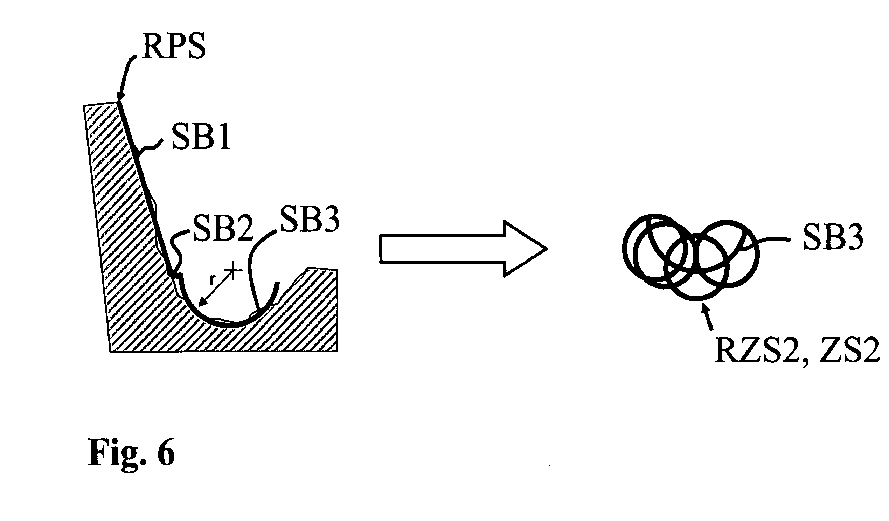

Anhand der Figuren 6 bis 9c werden nun beispielhaft bestimmte markante Konturen erläutert, die zu Prüfstreckenbereichen führen, die in bestimmte gesondert zu behandelnde Prüfstreckenbereichsklassen fallen.

Figur 6 zeigt dabei einen Fall, in dem ein Prüfstreckenabschnitt eine Krümmung mit einem Radius r unterhalb eines vorgegebenen Grenzradius aufweist. Ein solcher Prüfstreckenabschnitt ist als gesonderter Prüfstreckenbereich SB3 zu klassifizieren, da hier das anhand von Figur 5 erläuterte Verfahren nicht besonders gut zur Prüfung geeignet ist. Daher wird beispielsweise über diesen Prüfstreckenbereich SB3 manuell oder automatisch im Referenz-Prüfbild eine geeignete Prüfzellenstruktur ZS2 gelegt, wobei auch hier darauf geachtet wird, dass die äußersten Prüfzellen jeweils genau mit dem Prüfstreckenabschnitt bzw. Prüfstreckenbereich SB3 enden.

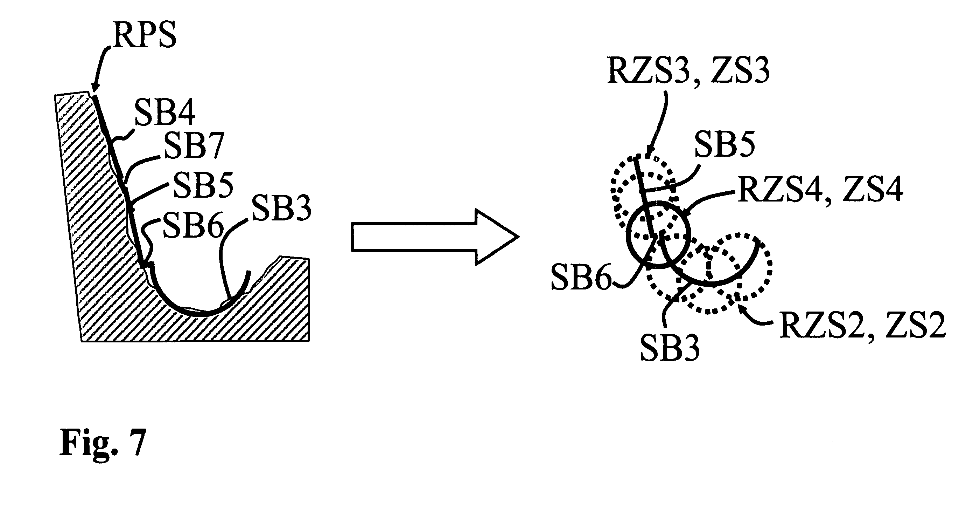

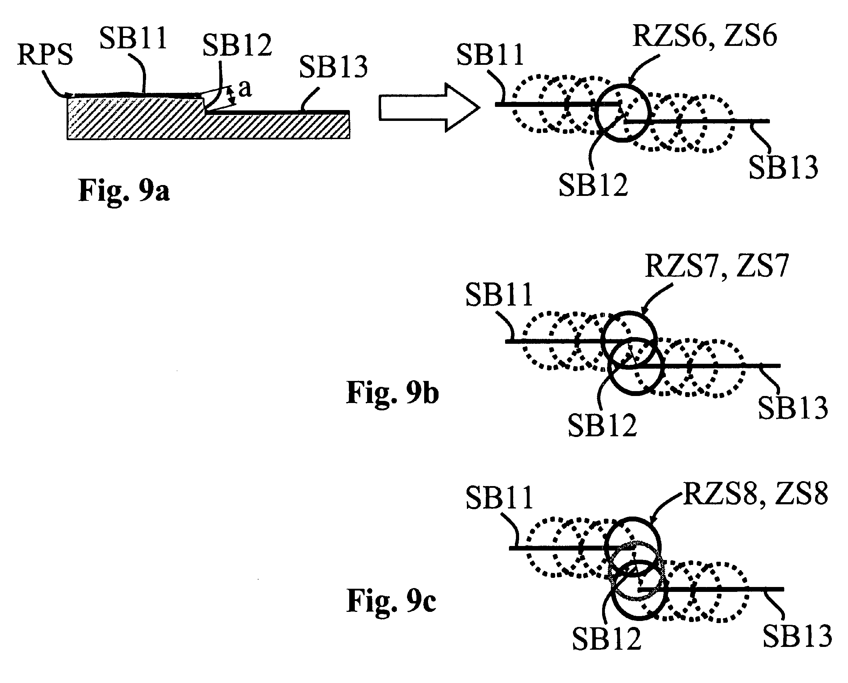

Figur 7 zeigt einen weiteren Fall, bei dem bestimmte Abschnitte der Prüfstrecke PS besonders kurz sind. Dies sind hier die Prüfstreckenabschnitte SB5 und SB3, die folglich aus diesem Grunde als besondere Prüfstreckenbereiche SB5, SB3 zu klassifizieren und gesondert zu behandeln sind. Die Klassifizierung kann gemäß der Klassifizierungsregeln daher so erfolgen, dass geprüft wird, ob ein Prüfstreckenabschnitt eine Länge aufweist, die unterhalb eines vorgegebenen Grenzwerts ist, beispielsweise eineinhalb Mal dem Durchmesser der Prüfzellen, wie sie an den nicht markanten Stellen eingesetzt werden sollen. Auch hier ist eine manuelle Vorgabe einzelner Prüfzellen innerhalb eines Referenz-Prüfbilds sinnvoll. Es ist zu beachten, dass Prüfstreckenbereich SB3 schon als Prüfstreckenbereich mit zu kleinem Radius gesondert zu behandeln ist. Dies Beispiel zeigt, dass ein Prüfstreckenbereich auch in verschiedenen Prüfstreckenbereichsklassen fallen könnte, wobei in den Prüfregeln festgelegt ist, nach welchen Prüfregeln für welche Prüfstreckenbereichsklasse eine weitere Behandlung dieses Prüfstreckenbereichs erfolgen sollte. Auf der rechten Seite von Figur 7 ist eine entsprechende Prüfzellenstruktur für einen solchen kurzen Prüfstreckenbereich SB5 dargestellt. Gezeigt ist hier auch noch einmal die Prüfzellenstruktur für den zu stark gekrümmten Prüfstreckenbereich SB3 sowie die Behandlung eines Übergangsbereichs SB6 zwischen den benachbarten Prüfzellenbereichen SB5 und SB3, der hier durch eine einzelne Prüfzelle, die sozusagen eine eigenständige Prüfzellenstruktur ZS4 bildet, dargestellt ist. Die Behandlung solcher Sprungübergänge wird aber noch nachfolgend anhand der Figuren 9a bis 9c genauer erläutert.

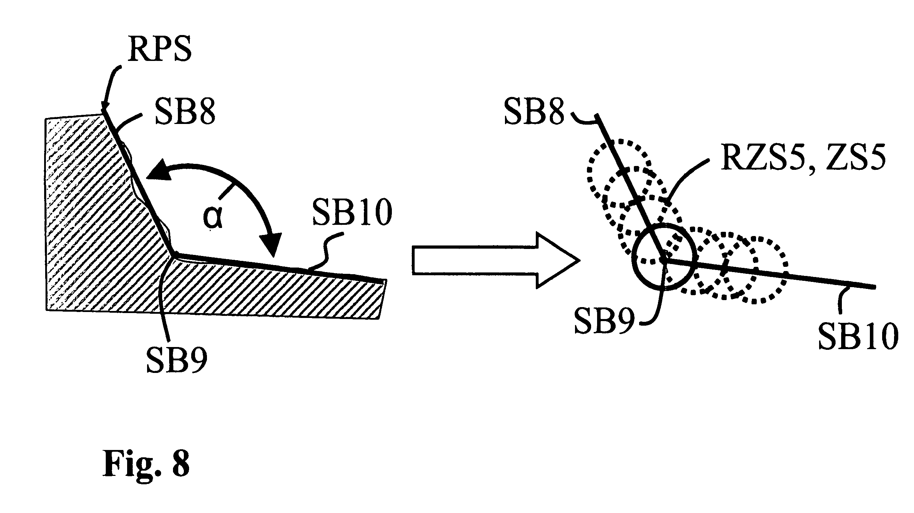

Figur 8 zeigt eine weitere Prüfstreckenbereichsklasse eines Übergangs zwischen zwei Prüfstreckenabschnitten SB8, SB10, die unter einem spitzen Winkel α aufeinander stoßen, der kleiner als ein vorgegebener Grenzwinkel ist. Das heißt, der Prüfstreckenbereich SB9 wird durch die Endbereiche der unter dem spitzen Winkel α aneinander stoßenden, durch gerade Prüfstreckenabschnitte gebildeten Prüfbereiche SB8, SB10 gebildet. Auch an solchen Ecken ist eine durchgehende Prüfung mit dem in Figur 5 erläuterten automatischen Verfahren in ausreichend guter Form nicht möglich. Daher wird hier vorzugsweise ebenfalls manuell oder automatisch eine Prüfzellenstruktur gemäß einer vorgegebenen Prüfregel definiert, die wiederum auf der rechten Seite von Figur 8 dargestellt ist. Gemäß der in dieser Prüfstreckenbereichsklasse festgelegten Prüfregel wird unmittelbar auf den Grenzpunkt eine Prüfzelle gelegt und weitere Prüfzellen laufen seitlich in die anderen Prüfbereiche SB8, SB10 hinein.

Die Figur 9a zeigt schließlich einen Fall für eine Prüfbereichsklasse, die durch Prüfbereiche gebildet wird, die einen Sprung zwischen zwei angrenzenden Prüfstreckenabschnitten umfassen. Hier sind dies die Prüfstreckenabschnitte SB11 und SB13, welche jeweils für sich einen Prüfbereich SB11, SB13 bilden. Der Abstand a zwischen den Enden dieser Prüfstreckenabschnitte ist größer als ein vorgegebener Grenzabstand. Daher muss dieser als gesonderter Prüfbereich SB12 klassifiziert werden. Auch hier wird gemäß einer bestimmten, vorher festgelegten Prüfregel eine Prüfzelle gesetzt, die diesen Abstand a überbrückt. Die Zelle wird hierbei so gelegt, dass ihr Mittelpunkt auf der Mitte der Linie liegt, die die Enden der Prüfstreckenbereiche SB11, SB13 verbindet. Zudem werden wieder weitere Prüfzellen gesetzt, die in die angrenzenden Prüfbereiche SB11, SB13 jeweils hineinlaufen. Eine solche Prüfzellenstruktur ZS6 ist auf der rechten Seite von Figur 9a dargestellt. Die Figuren 9b und 9c zeigen Situationen, in denen der Abstand a noch größer ist. Figur 9b zeigt einen Fall, bei dem der Abstand a größer als ein weiter gesetzter zweiter Grenzabstand liegt. In diesem Fall werden zwei Zellen gesetzt, die jeweils ihren Mittelpunkt am Endpunkt der beiden mit Abstand voreinander liegenden Prüfabschnitte SB11, SB13 haben, und es werden wiederum Zellen gesetzt, die in die angrenzenden Prüfbereiche SB11, SB13 hineinlaufen. Figur 9c zeigt schließlich einen Fall, bei dem der Abstand a einen noch weiter gefassten Grenzabstand überschreitet. In diesem Fall werden drei Prüfzellen gesetzt, eine mittig auf der Verbindungslinie zwischen den Enden der Prüfstreckenabschnitte SB11, SB13 und jeweils eine Zelle an den beiden Endpunkten der Prüfstreckenabschnitte SB11, SB13 sowie wie üblich weitere Prüfzellen, die in die Prüfstreckenabschnitte SB11, SB13 hineinlaufen.

Wie bereits erläutert, werden die gemäß den vorgegebenen Prüfregeln innerhalb des Referenz-Prüfbilds manuell oder automatisch gesetzten Prüfzellenstrukturen als Referenz-Prüfzellenstrukturen unmittelbar für die spätere Prüfung auch übernommen und lediglich hinsichtlich ihrer Position etwas an das aktuelle Prüfbild angepasst. Daher sind die in den Figuren 6 bis 9a dargestellten Referenz-Prüfzellenstrukturen RZS2, RZS3, RZS4, RZS5, RZS6, RZS7, RZS8 gleichzeitig auch die Prüfzellenstrukturen ZS2, ZS3, ZS4, ZS5, ZS6, ZS7, ZS8, so dass in den Figuren die Prüfzellenstrukturen jeweils mit entsprechenden doppelten Bezugsziffern versehen wurden.

Im Verfahrensschritt IIIg gemäß Figur 2 werden dann aus dem Speicher schließlich die Referenzwerte ermittelt, die im Verfahrensschritt IIc ebenfalls dort hinterlegt worden sind, und zur Prüfung markanter Prüfstreckenbereiche mit Hilfe der vom Referenz-Prüfbild übernommenen Prüfzellenstrukturen herangezogen. Auch hierfür können verschiedenste Prüfregeln genutzt werden. Beispielsweise können als Referenzwerte für jede einzelne Zelle ein mittlerer Intensitätswert sowie zusätzlich eine Differenz des mittleren Intensitätswerts zur jeweiligen Nachbarprüfzelle hinterlegt worden sein. Genau diese Werte werden dann auch bei der eigentlichen Prüfung für die einzelnen Prüfzellen ermittelt. Bei einer Auswertung im Rahmen der Prüfung kann dann ein Vergleich des mittleren Intensitätswerts jeder Prüfzelle mit dem eingelernten Referenzwert erfolgen. Ebenso ist aber auch ein Vergleich des mittleren Referenzwerts mit einem absoluten Schwellenwert für jede einzelne Prüfzelle möglich. Weiterhin ist auch ein Vergleich der mittleren Intensitätswerte zu den benachbarten Prüfzellen gegenüber entsprechenden Messwerten bzw. Differenzwerten eines eingelernten Referenzbildes möglich. Bei den genannten Prüfregeln handelt es sich lediglich um Beispiele, wobei auch eine Kombination der verschiedensten Prüfregeln angewandt werden kann. Letztlich sollte die genaue Festlegung der Prüfregel in Abhängigkeit von dem zu prüfenden Objekt bzw. der konkreten Kontur sowie den darin speziellen auftretenden markanten Stellen- bzw. Prüfbereichen und der gewünschten Empfindlichkeit der Prüfung erfolgen.

In einem Verfahrensschritt IIIh wird dann schließlich das Prüfergebnis ausgegeben, beispielsweise in Form eines optischen und/oder akustischen Warnsignals einem Bediener angezeigt und/oder es wird ein Steuersignal ausgegeben, um ein fehlerhaftes Prüfobjekt auszusortieren.

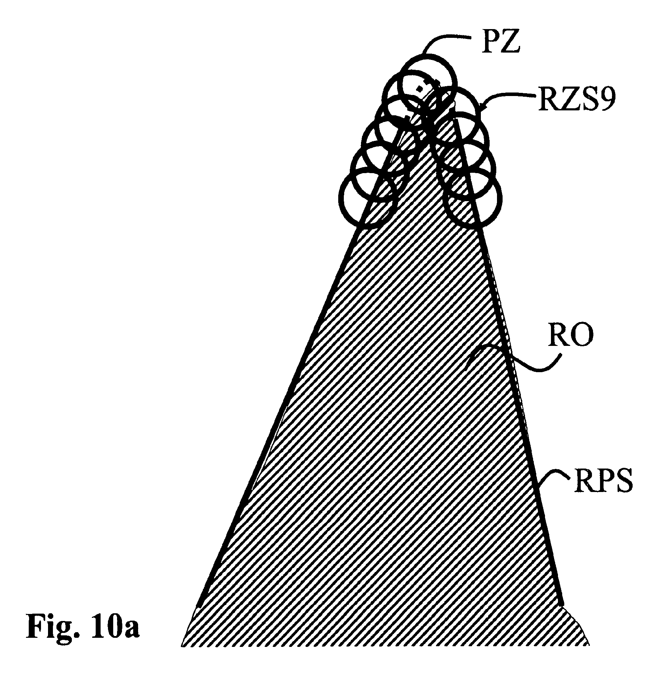

Anhand der Figuren 10a bis 10c wird noch einmal dargestellt, wie bestimmte Prüfstreckenbereiche einer Prüfstrecke PS gemäß unterschiedlichen Prüfregeln geprüft werden können. In Figur 10a ist dabei ein Abschnitt eines Sägezahns des in Figur 3 und 4 bereits dargestellten Prüfobjekts gezeigt. Die Kontur wurde in zwei gerade Konturabschnitte und einen die Spitze abbildenden, sehr stark gekrümmten Konturabschnitt aufgeteilt. Diese Spitze, welche den stark gekrümmten Konturabschnitt enthält, bildet einen Prüfbereich, welcher in eine gesonderte Prüfbereichsklasse einklassifiziert wird. Hier erfolgte während des Einlernvorgangs anhand eines Referenzprüfbilds beispielsweise eine manuelle Positionierung einer Referenz-Prüfzellenstruktur RZS9, wobei insbesondere an die Spitze genau eine Prüfzelle PZ gelegt wird und weitere Prüfzellen in die geraden Konturabschnitte hineinragen, so dass sie die an die Spitze angrenzenden Prüfstreckenbereiche der Referenz-Prüfstrecke RPS des Referenz-Prüfobjekts RO überlappen.

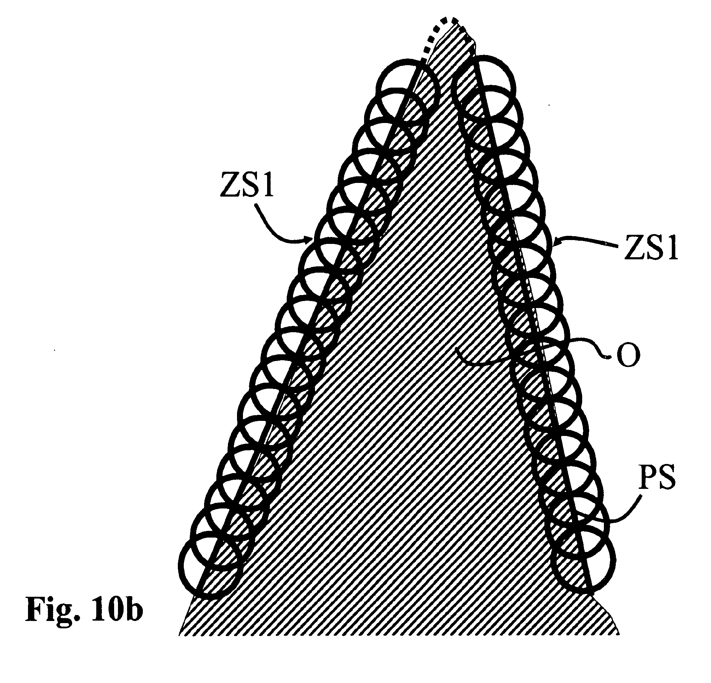

Figur 10b zeigt, wie die Prüfung am späteren Prüfobjekt O entlang dieser geraden Prüfstreckenbereiche mit Hilfe des Aufbaus einer einfachen automatischen Prüfzellenstruktur ZS1 erfolgt, wie sie bereits anhand von Figur 5 erläutert wurde.

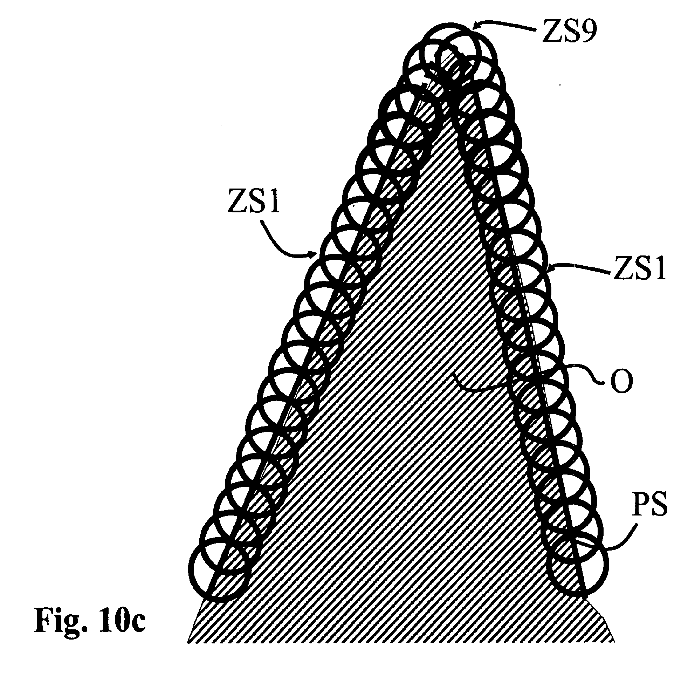

Figur 10c zeigt schließlich, wie nachfolgend im Prüfobjekt O eine Prüfung der im in Figur 10b dargestellten Verfahrensschritt bisher nicht geprüften Spitze erfolgt, indem die im in Figur 10a dargestellten Einlernschritt erstellte Referenz-Prüfzellenstruktur RZS9 übernommen und an die Spitze des Prüfobjekts O angepasst wird und mit Hilfe dieser Prüfzellenstruktur ZS9 dann die Prüfung der Spitze erfolgt. Durch den Überlapp der Prüfzellenstrukturen ZS9 sowie ZS1 ist dafür gesorgt, dass die gesamte Kontur der Sägezahnspitze geprüft ist.

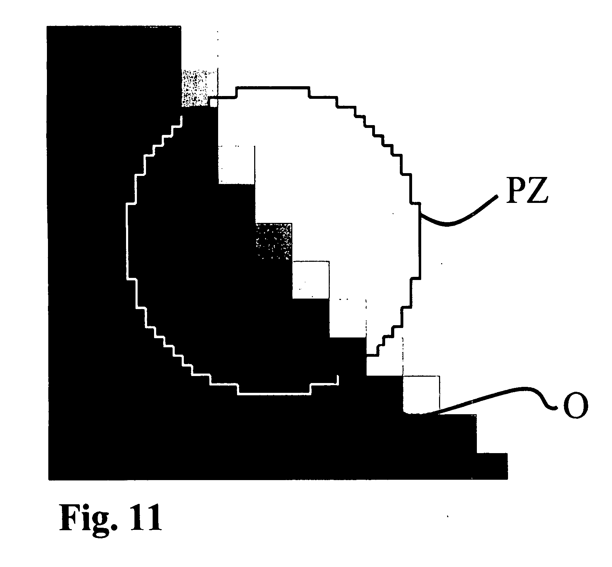

Wie bereits mehrfach erläutert, ist es besonders vorteilhaft, wenn die Prüfzellen so ausgebildet sind, dass sie möglichst gut eine Kreisform approximieren. Wie gut eine solche Annäherung an eine Kreisform erfolgen kann, hängt u. a. von der Bildauflösung ab. Besonders bevorzugt erfolgt daher ein Setzen der Prüfzellen im Sub-Pixelbereich. Hierzu wird das Ursprungsbild - wobei es sich je nachdem, ob die Prüfzelle im Referenz-Prüfbild oder im Prüfbild selbst gesetzt wird, um das Referenz-Prüfbild oder das Prüfbild handeln kann - zunächst vergrößert. Anschließend wird die Prüfzelle PZ eingepasst. In Figur 11 wird das Bild um einen Faktor 4 vergrößert, d. h. jeder Pixel wird durch ein Feld von 4 x 4 Pixel ersetzt, wobei die einzelnen Pixel dieses 4 x 4-Feldes jeweils den Intensitätswert des betreffenden Pixels im Ursprungsbild erhalten. Wie in Figur 11 gut zu sehen ist, kann der Kreis also so gesetzt werden, dass er auch mittig durch die Ursprungspixel verläuft. Dieses Verfahren hat den Vorteil, dass Randpixel mit niedrigem Rechenaufwand gut gewichtet werden können. Dadurch kann insbesondere auch die Prüfzelle selbst im Verhältnis zu der Kontur kleiner gemacht werden, da eine Fehlpositionierung um einen einzelnen Pixel nicht so viel Einfluss hat. Mit kleineren Zellen können aber wiederum feinere Fehler gefunden werden, so dass dieses Verfahren auch zur Verbesserung der Fehlererkennung beiträgt.

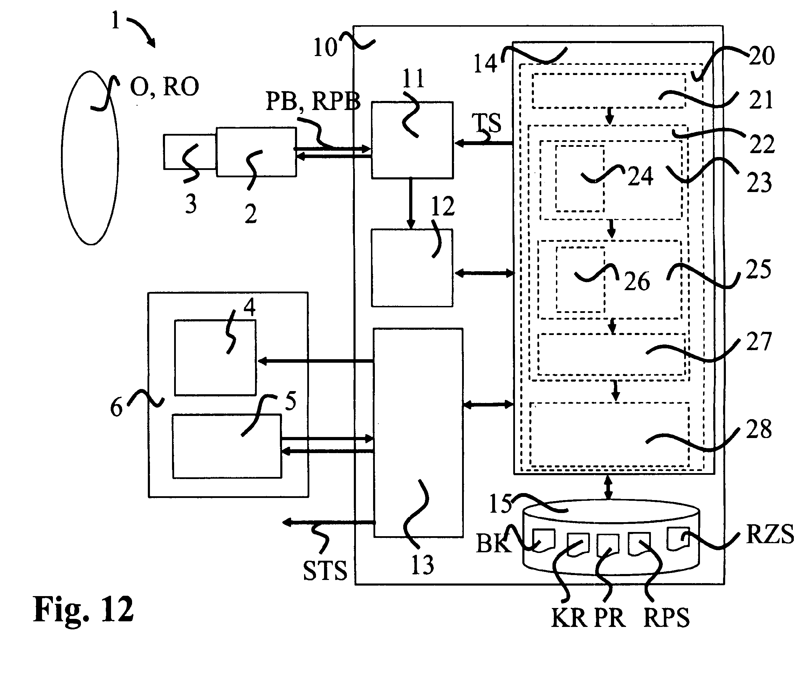

Anhand von Figur 12 wird nun noch schematisch ein möglicher Aufbau eines erfindungsgemäßen Prüfsystems erläutert.

Ein zentraler Bestandteil des Prüfsystems gemäß Figur 12 ist eine Rechnereinheit 10, an welche eine CCD-Kamera 2 als Bildsensoreinheit 2 mit einem Objektiv 3 angeschlossen ist. Während einer automatischen Prüfung von Konturen werden die Prüfobjekte O mit Hilfe einer geeigneten Positioniereinrichtung bzw. Transporteinrichtung (nicht dargestellt) an einer definierten Stelle im Aufnahmebereich der Kamera 2 positioniert. Beispielsweise kann die Kamera 2 direkt an oder über einem Transportband einer Produktionsstraße angeordnet sein. Bei einem Einlernen wird passend zur Kamera 2 ein Referenzobjekt RO positioniert und so ein Referenz-Prüfbild RPB aufgezeichnet.

Die Kamera 2 wird von einer Bildaufnahmeeinheit 11, beispielsweise einem sog. "Frame-Grabber" 11 angesteuert. Erhält dieser Frame-Grabber 11 von einem Steuerprogramm, welches auf einer CPU 14 der Rechnereinheit 10 abläuft, ein Triggersignal TS, so liest der Frame-Grabber 11 ein aktuell von der CCD-Kamera 2 erfasstes Prüfbild PB bzw. Referenz-Prüfbild RPB aus und hinterlegt dieses in einem Arbeitsspeicher 12 der Rechnereinheit 10. Die CPU 14 hat wiederum Zugriff auf diesen Arbeitsspeicher 12.

Weiter sind an die Rechnereinheit 2 über Ein-/Ausgabeschnittstellen, beispielsweise übliche COM-Schnittstellen, LPT-Schnittstellen, USB-Schnittstellen oder andere digitale Input- und/oder Output-Schnittstellen, welche hier als ein Schnittstellenblock 13 dargestellt sind, ein Monitor 4 und ein oder mehrere Eingabegeräte 5, beispielsweise eine Maus, ein Keyboard etc. angeschlossen, die gemeinsam eine Benutzerschnittstelle 6 mit einer graphischen Benutzeroberfläche bilden. Auch die Ein-/Ausgabeschnittstellen 13 sind mit der CPU 14 verbunden. Außerdem besitzt die Rechnereinheit 10 einen Permanentspeicher 15, beispielsweise einen Festplattenspeicher 15, auf welchen die CPU 14 ebenfalls Zugriff hat.

In Form von Softwaremodulen ist auf der CPU 14 u. a. ein Prüfmodul 20 installiert, welches verschiedene zum Aufbau des erfindungsgemäßen Prüfsystems benötigte Softwaremodule umfasst. Hierzu gehört ein Bildvorverarbeitungsmodul 21, welches beispielsweise dafür sorgt, dass mit Hilfe von bekannten Bildverarbeitungsalgorithmen im Prüfbild oder Referenz-Prüfbild eine Kontur extrahiert werden kann. Dieses Bildvorverarbeitungsmodul 21 kann auch über die Benutzerschnittstelle 6 angesteuert werden und es kann beispielsweise hiermit vom Bediener oder automatisch ein zu prüfender Bereich im Bild ausgewählt werden. In dem Bildvorverarbeitungsmodul 21 kann auch die Kontur bereits geglättet werden.

Die so ermittelte Kontur wird dann an das eigentliche Bildverarbeitungsmodul 22 übergeben. Dieses Bildverarbeitungsmodul 22 weist als Untereinheit zunächst eine Prüfstrecken-Ermittlungseinheit 23 auf, welche eine möglichst gut an die Kontur angepasste Prüfstrecke ermittelt. Teil dieser Prüfstrecken-Ermittlungseinheit 23 ist eine Prüfstrecken-Klassifizierungseinheit 24, welche beispielsweise bei einem Referenz-Prüfbild RFB die Prüfstrecke durch das bereits anhand von Figur 2 beschriebenen Verfahren im Einlernvorgang ermittelt und nach bestimmten Klassifizierungsregeln KR, die beispielsweise im Speicher 15 hinterlegt sind, einzelne Prüfstreckenbereiche in Prüfstreckenbereichsklassen BK klassifiziert bzw. einsortiert und entsprechend im Speicher 15 hinterlegt. Bei der eigentlichen Prüfung von Prüfobjekten O kann diese Prüfstrecken-Ermittlungseinheit 23 auch dazu dienen, eine bereits hinterlegte Referenz-Prüfstrecke RPS bzw. die durch die Referenz-Prüfstrecke RPS umfassten Prüfstreckenbereiche an eine Kontur des aktuellen Prüfbilds anzupassen.

Eine Prüfzellenermittlungseinheit 25 dient dann dazu, an die Prüfstrecke (bzw. im Einlernfall an die Referenz-Prüfstrecke) eine Prüfzellenstruktur gemäß der vorgegebenen Prüfregeln PR, welche ebenfalls im Speicher 15 hinterlegt sind, anzupassen. Diese Prüfzellenermittlungseinheit 25 kann beispielsweise auch über die Benutzerschnittstelle 6 angesteuert werden, um so manuell in bestimmten markanten Bereichen Prüfzellenstrukturen zu definieren. Im Übrigen ist diese Prüfzellenermittlungseinheit 25 aber auch in der Lage, gemäß den vorgegebenen Prüfregeln PR automatisch Prüfzellen zu definieren, insbesondere im Rahmen einer Prüfung von einfachen geraden Abschnitten gemäß den zuvor beschriebenen Prüfstreckenbereichen der ersten Prüfstreckenbereichsklasse. Diese Prüfzellenermittlungseinheit weist außerdem eine Prüfzellenstruktur-Übernahme- und -Anpassungseinheit 26 auf, um Referenz-Prüfzellenstrukturen RPS, welche im Einlernvorgang im Speicher 15 für ein bestimmtes Referenzobjekt hinterlegt worden sind, zu übernehmen und an ein aktuelles Prüfobjekt O bzw. die aktuell zu prüfende Kontur anzupassen. Eine Prüfeinheit 27 dient dann dazu, auf Basis der festgelegten Prüfzellenstrukturen die Kontur zu prüfen, wie dies zuvor bereits ausführlich erläutert wurde.

Eine Ausgabeeinheit 28 sorgt schließlich für eine Ausgabe des Prüfergebnisses, beispielsweise in der Form, dass der Benutzer über die Benutzerschnittstelle 6 durch Ausgabe eines akustischen und/oder optischen Signals gewarnt wird, wenn ein fehlerhaftes Prüfobjekt O detektiert wurde. Außerdem kann über die Eingabe- und Ausgabeschnittstellen 13 auch ein Steuersignal STS ausgegeben werden, welches beispielsweise eine Aussortiereinrichtung der (nicht dargestellten) Transporteinrichtung ansteuert, die ein fehlerhaft erkanntes Prüfobjekt aussortiert.

Es wird abschließend noch einmal darauf hingewiesen, dass es sich bei dem in den Figuren dargestellten System sowie den im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen, wie er in den anhängenden Ansprüchen definert ist. So ist beispielsweise die Anwendung der Erfindung nicht auf die Prüfung mittels Prüfbildern beschränkt, die mit Lichtwellen im sichtbaren Bereich aufgenommen wurden, sondern als Prüfbilder können auch andere Aufnahmen wie z.B. Infrarotaufnahmen, Röntgenaufnahmen etc. dienen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können. Die Begriffe "Einheit" und "Modul" schließen im Übrigen nicht aus, dass die jeweiligen Komponenten auch aus mehreren ggf. auch räumlich getrennten, zusammenwirkenden Teilkomponenten bestehen können.

## Patentansprüche

1. Verfahren zur optischen Prüfung einer Kontur (K) eines Prüfobjekts (O) mit folgenden Verfahrensschritten:
- Erfassung eines Prüfbilds (PB), welches zumindest die zu prüfende Kontur (K) zeigt,
- Ermitteln einer an die Kontur (K) angepassten Prüfstrecke (PS) innerhalb des Prüfbilds (PB), wobei die Prüfstrecke (PS) eine Anzahl von Prüfstreckenbereichen (SB1, SB2, SB3, SB4, SB5, SB6, SB7, SB8, SB9, SB10, SB11, SB12, SB13) umfasst, die jeweils in definierte Prüfstreckenbereichsklassen (BK) gemäß vorgegebenen Klassifizierungsregeln (KR) klassifiziert sind,
- Definition jeweils einer aus einer Anzahl von Prüfzellen (PZ) bestehenden Prüfzellenstruktur (ZS1, ZS2, ZS3, ZS4, ZS5, ZS6, ZS7, ZS8, ZS9) entlang der Prüfstreckenbereiche (SB1, SB2, SB3, SB4, SB5, SB6, SB7, SB8, SB9, SB10, SB11, SB12, SB13) der Prüfstrecke (PS) und Ermitteln von Prüfparameterwerten (PPW) für die einzelnen Prüfzellen (PZ) gemäß für die jeweilige Prüfstreckenbereichsklasse (BK) vorgegebenen Prüfregeln (PR),
- Prüfen der Kontur (K) entlang der einzelnen Prüfstreckenbereiche (SB1, SB2, SB3, SB4, SB5, SB6, SB7, SB8, SB9, SB10, SB11, SB12, SB13) auf Basis der Prüfparameterwerte (PPW) der Prüfzellen (PZ) gemäß für die jeweilige Prüfstreckenbereichsklasse (BK) vorgegebenen Prüfregeln (PR).

2. Verfahren nach Anspruch 1, **dadurch gekennzeichnet,**
**dass** zunächst in einem Referenz-Prüfbild (RPB), welches eine der zu prüfenden Kontur (K) entsprechende Kontur (K) eines Referenz-Prüfobjekts (RO) zeigt, eine an die Kontur (K) angepasste Referenz-Prüfstrecke (RPS) ermittelt und analysiert wird, wobei Prüfstreckenbereiche (SB1, SB2, SB3, SB4, SB5, SB6, SB7, SB8, SB9, SB10, SB11, SB12, SB13) der Referenz-Prüfstrecke (RPS) gemäß vorgegebenen Klassifizierungsregeln (KR) in definierte Prüfstreckenbereichsklassen (BK) klassifiziert werden,
und **dass** auf Basis der Referenz-Prüfstrecke (RPS) eine Ermittlung von Prüfstreckenbereichen der Prüfstrecke (PS) innerhalb des Prüfbilds (PB) und/oder auf Basis einer entlang eines Prüfstreckenbereichs (SB1, SB2, SB3, SB4, SB5, SB6, SB7, SB8, SB9, SB10, SB11, SB12, SB13) der Referenz-Prüfstrecke (RPS) definierten Referenz-Prüfzellenstruktur (RZS1, RZS2, RZS3, RZS4, RZS5, RZS6, RZS7, RZS8, RZS9) eine Definition einer Prüfzellenstruktur (ZS1, ZS2, ZS93, ZS4, ZS5. ZS6, ZS7, ZS8, ZS9) entlang eines Prüfstreckenbereichs (SB1, SB2, SB3, SB4, SB5, SB6, SB7, SB8, SB9, SB10, SB11, SB12, SB13) der Prüfstrecke (PS) einer aktuell zu prüfenden Kontur (K) erfolgt.

3. Verfahren nach Anspruch 2, **dadurch gekennzeichnet, dass** auf Basis von Prüfparameterwerten (PPW) von Prüfzellen (PZ) der Referenz-Prüfzellenstruktur (RZS1, RZS2, RZS3, RZS4, RZS5, RZS6, RZS7, RZS8, RZS9) Referenzwerte (RW) für eine spätere Prüfung einer Kontur (K) von Prüfobjekten ermittelt werden.

4. Verfahren nach einem der Ansprüche 1 bis 3, **dadurch gekennzeichnet, dass** zur automatischen Ermittlung einer Prüfstrecke oder Referenz-Prüfstrecke (RPS) eine Kontur (K) eines Prüfobjekts oder Referenz-Prüfobjekts (RO) aus dem Prüfbild oder Referenz-Prüfbild (RPB) extrahiert wird und diese Kontur (K) in Konturabschnitte (KA1, KA2, KA3, KA4, KA5, KA6, KA7, KA8, KA9) mit bestimmten charakteristischen Merkmalen aufgebrochen wird.

5. Verfahren nach Anspruch 4, **dadurch gekennzeichnet, dass** zum Aufbrechen der Kontur (K) in Konturabschnitte (KA1, KA2, KA3, KA4, KA5, KA6, KA7, KA8, KA9) mit bestimmten charakteristischen Merkmalen die Kontur (K) zunächst mit einem Polygonapproximations-Verfahren durch einen Polygonzug angenähert wird und in einem weiteren Approximationsschritt dann einzelne Polygonabschnitte des Polygonzugs zur Bildung von Prüfstreckenabschnitten jeweils an einen dem betreffenden Polygonabschnitt zugeordneten Abschnitt der Kontur (K) approximiert werden.

6. Verfahren nach einem der vorhergehenden Ansprüche, **dadurch gekennzeichnet, dass** die Definition einer Prüfzellenstruktur (ZS6, ZS7, ZS8) oder Referenz-Prüfzellenstruktur (RZS6, RZS7, RZS8) an einem Übergangsbereich zwischen zwei entlang der Kontur aufeinander folgenden Prüfstreckenabschnitten (SB11, SB13), deren zueinander gewandte Enden nicht aufeinander treffen, zumindest teilweise entlang einer Verbindungslinie zwischen den jeweiligen Enden der beiden Prüfstreckenabschnitte (SB11, SB13) erfolgt.

7. Verfahren nach einem der vorhergehenden Ansprüche, **dadurch gekennzeichnet, dass** für eine Klassifizierung von Prüfstreckenbereichen (SB1, SB2, SB3, SB4, SB5, SB6, SB7, SB8, SB9, SB10, SB11, SB12, SB13) zumindest ein Teil der folgenden Prüfstreckenbereichsklassen vorgegeben ist:
- eine erste Prüfstreckenbereichsklasse für gerade Prüfstreckenabschnitte (SB1, SB8, SB9, SB11, SB13) und gebogene Prüfstreckenabschnitte, deren Radius größer oder gleich einem vorgegebenen Grenzradius ist,
- eine zweite Prüfstreckenbereichsklasse für gebogene Prüfstreckenabschnitte (SB3, SB7), deren Radius kleiner oder gleich einem vorgegebenen Grenzradius ist,
- eine dritte Prüfstreckenbereichsklasse für Prüfstreckenabschnitte (SB4, SB5, SB7), deren Länge kleiner oder gleich einer vorgegebenen Grenzlänge ist,
- eine vierte Prüfstreckenbereichsklasse für Prüfstreckenbereiche (SB9), an denen zwei Prüfstreckenabschnitte (SB9, SB10) unter einem spitzen Winkel (α) aufeinander treffen, dessen Betrag kleiner oder gleich einem vorgegebenen Grenzwinkel ist,
- eine fünfte Prüfstreckenbereichsklasse für Prüfstreckenbereiche (SB12) in einem Übergangsbereich zwischen zwei entlang der Kontur aufeinander folgenden Prüfstreckenabschnitten (SB11, SB13), deren zueinander gewandte Enden einen Abstand (a) voneinander aufweisen, der größer oder gleich einem vorgegebenen Grenzabstand ist.

8. Verfahren nach einem der vorhergehenden Ansprüche, **dadurch gekennzeichnet, dass** für Prüfstreckenbereiche (SB1, SB8, SB9, SB11, SB13) zumindest einer der Prüfbereichskiassen eine automatische Definition einer Prüfzellenstruktur (ZS1) gemäß einer ersten Prüfzellenstrukturierungsregel erfolgt
und für Prüfstreckenbereiche (SB2, SB3, SB4, SB5, SB6, SB7, SB10, SB12) zumindest einer anderen der Prüfbereichsklassen eine automatische und/oder manuelle Definition einer Prüfzellenstruktur (ZS2, ZS3, ZS4, ZS5, ZS6, ZS7, ZS8, ZS9) gemäß zumindest einer zweiten Prüfzellenstrukturierungsregel erfolgt.

9. Verfahren nach einem der vorhergehenden Ansprüche, **dadurch gekennzeichnet, dass** eine an einem Ende eines Prüfstreckenabschnitts (SB1) liegende Prüfzelle (PZ) so definiert wird, dass das betreffende Ende des Prüfstreckenabschnitts (SB1) auf einem Rand der Prüfzelle (PZ) liegt.

10. Verfahren nach einem der vorhergehenden Ansprüche, **dadurch gekennzeichnet, dass** bei zwei entlang der Prüfstrecke angrenzenden oder sich überlappenden Prüfstreckenbereichen (SB5, SB6, SB7, SB8, SB9, SB10, SB11, SB12, SB13) die Prüf2ellenstruktur (ZS4, ZS5, ZS6, ZS7, ZS8, ZS9) und/oder Referenz-Prüfzellenstruktur (RZS4, RZS5, RZS6, RZS7, RZS8, RZS9) zumindest eines der beiden Prüfstreckenbereiche (SB6, SB9, SB12) so definiert wird, dass sie den anderen Prüfstreckenbereich (SB5, SB7, SB8, SB10, SB11, SB12) zumindest teilweise überdeckt.

11. Verfahren nach einem der vorhergehenden Ansprüche, **dadurch gekennzeichnet, dass** die Prüfzellen (PZ) jeweils im Wesentlichen eine Kreisform oder eine einen Kreis annähernde konvexe Polygonform mit mindestens fünf Ecken aufweisen.

12. Prüfsystem (1) zur optischen Prüfung einer Kontur eines Prüfobjekts, mit
- einer Bildsensoreinheit (2) zur Erfassung eines Prüfbilds (PB, RPB) eines Prüfobjekts (O, RO), weiches zumindest die zu prüfende Kontur (K) zeigt,
- einer Prüfstreckenermittlungseinheit (23) zum Ermitteln einer an die Kontur (K) angepassten Prüfstrecke (PS) innerhalb des Prüfbilds, wobei die Prüfstrecke (PS) eine Anzahl von Prüfstreckenbereichen (SB1, SB2, SB3, SB4, SB5, SB6, SB7, SB8, SB9, SB10, SB11, SB12, SB13) umfasst, die jeweils in definierte Prüfstreckenbereichsklassen (BK) gemäß vorgegebenen Klassifizierungsregeln (KR) klassifiziert sind,
- eine Speichereinheit (15), in welcher für verschiedene Prüfstreckenbereichsklassen Prüfregeln (PR) hinterlegt sind,
- eine Prüfzellenermittlungseinheit (25) zur Definition jeweils einer aus einer Anzahl von Prüfzellen (PZ) bestehenden Prüfzellenstruktur (ZS1, ZS2, ZS3, ZS4, ZS5, ZS6, ZS7, ZS8, ZS9) entlang der Prüfstreckenbereiche (SB1, SB2, SB3, SB4, SB5, SB6, SB7, SB8, SB9, SB10, SB11, SB12, SB13) der Prüfstrecke (PS) und zum Ermitteln von Prüfparameterwerten (PPW) für die einzelnen Prüfzellen (PZ) gemäß für die jeweilige Prüfstreckenbereichsklasse (BK) vorgegebenen Prüfregeln (PR),
- einer Prüfeinheit (27) zum Prüfen der Kontur (K) entlang der einzelnen Prüfstreckenbereiche (SB1, SB2, SB3, SB4, SB5, SB6, SB7, SB8, SB9, SB10, SB11, SB12, SB13) auf Basis der Prüfparameterwerte (PPW) der Prüfzellen (PZ) gemäß für die jeweilige Prüfstreckenbereichsklasse (BK) vorgegebenen Prüfregeln (PR),
- einer Ausgabeeinheit (28) zur Ausgabe eines Prüfergebnisses.

13. Prüfsystem nach Anspruch 14, **gekennzeichnet durch**
- eine Speichereinheit (15), in welcher für verschiedene Prüfstreckenbereichsklassen Klassifizierungsregeln (KR) hinterlegt sind,
- und eine Prüfstreckenklassifizierungseinheit (24), um eine an die Kontur (K) angepasste Prüfstrecke (PS) zu analysieren und dabei Prüfstreckenbereiche (SB1, SB2, SB3, SB4, SB5, SB6, SB7, SB8, SB9, SB10, SB11, SB12, SB13) der Prüfstrecke (PS) gemäß vorgegebenen Klassifizierungsregeln (KR) in definierte Prüfstreckenbereichsklassen (BK) zu klassifizieren.

14. Prüfsystem nach Anspruch 13 oder 14, **gekennzeichnet durch**
- eine Speichereinheit (15) zur Speicherung einer anhand eines Referenz-Prüfbilds (RPB), welches eine der zu prüfenden Kontur (K) entsprechende Kontur eines Referenz-Prüfobjekts (RO) zeigt, ermittelten Prüfstreckenbereichs einer Referenz-Prüfstrecke (RPS) und/oder Referenz-Prüfzellenstruktur (RZS),
- eine Prüfstreckenermittlungseinheit (23), welche so ausgebildet ist, dass sie auf Basis einer Referenz-Prüfstrecke (RPS) eine Prüfstrecke (PS) für eine zu prüfende Kontur (K) innerhalb des Prüfbilds (PB) ermitteln kann,
- eine Prüfzellenermittlungseinheit (25), welche so ausgebildet ist, dass sie auf Basis einer entlang eines Prüfstreckenbereichs (SB1, SB2, SB3, SB4, SB5, SB6, SB7, SB8, SB9, SB10, SB11, SB12, SB13) der Referenz-Prüfstrecke (RPS) definierten Referenz-Prüfzellenstruktur eine Prüfzellenstruktur (ZS1, ZS2, ZS3, ZS4, ZS5, ZS6, ZS7, ZS8, ZS9) entlang eines Prüfstreckenbereichs (SB1, SB2, SB3, SB4, SB5, SB6, SB7, SB8, SB9, SB10, SB11, SB12, SB13) der Prüfstrecke (PS) für eine aktuell zu prüfende Kontur (K) festlegt.

15. Computerprogrammprodukt, welches direkt in einen Speicher einer programmierbaren Rechnereinheit (10) eines Prüfsystems (1) ladbar ist, mit Programmcode-Mitteln, um alle Schritte eines Verfahrens nach einem der Ansprüche 1 bis 11 auszuführen, wenn das Programm auf der Rechnereinheit (10) ausgeführt wird.

## Claims

1. Method for the optical inspection of a contour (K) of a test object (O) having the following steps:
- capturing a test image (PB), which displays at least the contour (K) to be inspected,
- identifying a test segment (PS) within the test image (PB) that is adapted to match the contour (K), wherein the test segment (PS) comprises a number of test segment regions (SB1, SR 2, SB3, SB4, SB5, SB6, SB7, SB8, SB9, SB10, SB11, SB12, SB13), each of which is classified into defined test segment region classes (BK) in accordance with specified classification rules (KR),
- definition of a test cell structure (ZS1, ZS2, ZS3, ZS4, ZS5, ZS6, ZS7, ZS8, ZS9), each consisting of a number of test cells (PZ), along the test segment regions (SB1, SR2, SB3, SB4, SB5, SB6, SB7, SB8, SB9, SB10, SB11, SB12, SB13) of the test segment (PS) and determining test parameter values (PPW) for the individual test cells (PZ) in accordance with test rules (PR) specified for the respective test segment region class (BK),
- testing the contour (K) along the individual test segment regions (SB1, SR2, SB3, SB4, SB5, SB6, SB7, SB8, SB9, SB10, SB11, SB12, SB13) on the basis of the test parameter values (PPW) of the test cells (PZ) in accordance with test rules (PR) specified for the respective test segment region class (BK).

2. Method according to Claim 1, **characterized in that** in a reference test image (RPB) which shows a contour (K) of a reference test object (RO) corresponding to the contour to be tested (K), a reference test segment (RPS) matched to the contour (K) is firstly determined and analysed, with test segment regions (SB1, SR2, SB3, SB4, SB5, SB6, SB7, SB8, SB9, SB10, SB11, SB12, SB13) of the reference test segment (RPS) being classified into defined test segment region classes (BK) in accordance with specified classification rules (KR), and that on the basis of the reference test segment (RPS), test segment regions of the test segment (PS) are determined within the test image (PB) and/or on the basis of a reference test cell structure (RZS1, RZS2, RZS3, RZS4, RZS5, RZS6, RZ57, RZS8, RZS9) defined along a test segment region (SB1, SR2, SB3, SB4, SB5, SB6, SB7, SB8, SB9, SB10, SB11, SB12, SB13) of the reference test segment (RPS), a test cell structure (ZS1, ZS2, ZS3, ZS4, ZS5, ZS6, ZS7, ZS8, ZS9) is defined along a test segment region (SB1, SR2. SB3, SB4, SB5, SB6, SB7, SB8, SB9, SB10, SB11. SB12, SB13) of the test segment (PS) of a contour (K) currently under test.

3. Method of Claim 2, **characterized in that** on the basis of test parameter values (PPW) of test cells (PZ) of the reference test cell structure (RZS1, RZS2, RZS3, RZS4, RZS5, RZS6, RZS7, RZS8, RZS9), reference values (RW) are determined for a subsequent testing of a contour (K) of test objects.

4. Method according to any one of Claims 1 to 3, **characterized in that** in order to obtain the automatic determination of a test segment or a reference test segment (RPS), a contour (K) of a test object or reference test object (RO) is extracted from the test image or reference test image (RPB) and this contour (K) is split into contour sections (KA1, KA2, KA3, KA4, KA5, KA6, KA7, KA8, KA9) with specific characteristic features.

5. Method of Claim 4, **characterized in that** in order to split the contour (K) into contour sections (KA1, KA2, KA3, KA4, KA5, KA6, KA7, KA8, KA9) with certain characteristic features, the contour (K) is first approximated by a polygon sequence using a polygon approximation method, and then in a subsequent approximation step in order to form test segment sections, individual polygon sections of the polygon sequence are each approximated to a section of the contour (K) that is associated with the polygon section concerned.

6. Method according to any one of the preceding claims, **characterized in that** the definition of a test cell structure (ZS6, ZS7, ZS8) or reference test cell structure (RZS6, RZS7, RZS8) is performed at a transition region between two consecutive test segment sections (SB11, SB13) along the contour, the facing ends of which do not touch each other, at least partially along a connecting line between the respective ends of the two test segment sections (SB11, SB113),

7. Method according to any one of the preceding claims, **characterized in that** in order to perform a classification of test segment regions (SB1, SR2, SB3, SB4, SB5, SB6, SB7, SB8, SB9, SB10, SB11, SB12, SB13) at least a part of the following test segment region classes is specified:
- a first test segment region class for straight test segment sections (SB1, SB8, SB9, SB11, SB13) and curved test segment sections whose radius is greater than or equal to a specified critical radius,
- second test segment region class for curved test segment sections (SB3, SB7) whose radius is less than or equal to a specified critical radius,
- a third test segment region class for test segment sections (SB4, SB5, SB7), whose length is less than or equal to a specified critical length,
- a fourth test segment region class for test segment regions (SB9), in which two test segment sections (SB9, SB10) meet at an acute angle (α), the value of which is less than or equal to a given critical angle,
- a fifth test segment region class for test segment regions (SB12) in a transition zone between two consecutive test segment sections (SB11, SB13) along the contour, the facing ends of which are a distance (a) apart from each other which is greater than or equal to a specified critical distance.

8. Method according to any one of the preceding claims, **characterized in that** for test segment regions (SB1 , SB8, SB9, SB11, SB13) of at least one of the test region classes an automatic definition of a test cell structure (ZS1) is performed in accordance with a first test cell structuring rule,
and for test segment regions (SR2, SB3, SB4, SB5, SB6, SB7, SB10, SB12) of at least one other of the test region classes, an automatic and/or manual definition of a test cell structure (ZS2, ZS3, ZS4, ZS5, ZS6, ZS7, ZS8, ZS9) is performed in accordance with at least one second test cell structuring rule.

9. Method according to any one of the preceding claims, **characterized in that** a test cell (PZ) located at one end of a test segment section (SB1), is defined such that the relevant end of the test segment section (SB1) is located on a periphery of the test cell (PZ).

10. Method according to any one of the preceding claims, **characterized in that** in the case of two test segment regions (SB5, SB6, SB7, SB8, SB9, SB10, SB11, SB12, SB13) which are adjacent or overlapping along the test segment, the test cell structure (ZS4, ZS5, ZS6, ZS7, ZS8, ZS9) and/or reference test cell structure (RZS4, RZS5, RZS6, RZS7, RZS8, RZS9) of at least one of the two test segment regions (SB6, SB9, SB12) is defined so as to at least partially cover the other test segment region (SB5, SB7, SB8, SB10, SB11, SB12).

11. Method according to any one of the preceding claims, **characterized in that** the test cells (PZ) each essentially have a circular shape or a convex polygonal shape approximating a circle with at least five vertices.

12. Inspection system (1) for the optical inspection of a contour of a test object, having
- an image sensor unit (2) for capturing a test image (PB, RPB) of a test object (O, RO), which displays at least the contour to be inspected (K),
- a test segment identification unit (23) to identify a test segment (PS) matched to the contour (K) within the test image, wherein the test segment (PS) comprises a number of test segment regions (SB1. SR2, SB3, SB4, SB5, SB6, SB7, SB8, SB9, SB10, SB11, SB12, SB13), each of which is classified into defined test segment region classes (BK) in accordance with specified classification rules (KR),
- a storage unit (15), in which test rules (PR) for different test segment region classes are stored.
- a test cell identification unit (25) for defining a test cell structure (ZS1, ZS2, ZS3, ZS4, ZS5, ZS6, ZS7, ZS8, ZS9), each consisting of a number of test cells (PZ), along the test segment regions (SB1, SR2, SB3, SB4, SB5, SB6, SB7, SB8, SB9, SB10, SB11, SB12, SB13) of the test segment (PS) and for determining test parameter values (PPW) for the individual test cells (PZ) in accordance with test rules (PR) specified for the respective test segment region class (BK),
- a test unit (27) for inspecting the contour (K) along the individual test segment regions (SB1, SR 2, SB3 -, SB4, SB5, SB6, SB7, SB8, SB9, SB10, SB11, SB12, SB13) on the basis of the test parameter values (PPW) of the test cells (PZ) in accordance with test rules (PR) specified for the respective test segment region class (BK),
- an output device (28) for outputting a test result.

13. Inspection system according to Claim 14, **characterised by**
- a storage unit (15), in which classification rules (KR) for different test segment region classes are stored,
- and a test segment classification unit (24), to analyse a test segment (PS) matched to the contour (K) and thereby to classify test segment regions (SB1, SR2, SB3, SB4, SB5, SB6, SB7, SB8, SB9, SB10, SB11, SB12, SB13) of the test segment (PS) into defined test segment region classes (BK) in accordance with specified classification rules (KR).

14. Inspection system according to Claim 13 or 14, **characterised by**
- a storage unit (15) for storing a test segment region of a reference test segment (RPS) and/or reference test cell structure (RZS), determined on the basis of a reference test image (RPB) which shows a contour of a reference test object (RO) corresponding to the contour (K) to be tested,
- a test segment identification unit (23), which is designed such that it can determine, on the basis of a reference test segment (RPS), a test segment (PS) for a contour (K) to be inspected within the test image (PB),
- a test cell identification unit (25), which is designed such that it specifies, on the basis of a reference test cell structure (ZS1, ZS2, ZS3, ZS4, ZS5, ZS6, ZS7, ZS8, ZS9) defined along a test segment region (SB1, SR2, SB3, SB4, SB5, SB6, SB7, SB8, SB9, SB10, SB11, SB12, SB13) of the reference test segment (RP8), a test cell structure along a test segment region (SB11, SR2, SB3, SB4, SB5, SB6, SB7, SB8, SB9, SB10, SB11, SB12, SB13) of the test segment (PS) for a contour (K) currently to be inspected.

15. Computer software product, which can be loaded directly into a memory of a programmable computer unit (10) of an inspection system (1), having program code resources for executing all steps of a method according to any one of Claims 1 to 11 when the program is running on the computer unit (10).

## Revendications

1. Procédé pour le contrôle optique d'un contour (K) d'un objet test (O) avec les étapes suivantes du procédé
- prise d'une image de contrôle (PB), laquelle présente au moins le contour (K) à contrôler,
- détermination d'un segment de contrôle (PS) adapté au contour (K) à l'intérieur de l'image de contrôle (PB), le segment de contrôle (PS) comprenant un certain nombre de zones de segment de contrôle (SB1, SB2, SB3, SB4, SB5, SB6, SB7, SB8, SB9, SB110, SB11, SB112, SB13) qui sont classées respectivement selon des catégories de zones de segment de contrôle (BK) définies conformément à des règles de classification (KR) prescrites, définition respectivement d'une structure de cellules de contrôle (ZS1, ZS2, ZS3, ZS4, ZS5, ZS6, ZS7, ZS8, ZS9) se composant d'un certain nombre de cellules de contrôle (PZ) le long des zones de segment de contrôle (SB1, SB2, SB3, SB4, SB5, SB6, SB7, SB8, SB9, SB10, SB11, SB12, SB13) du segment de contrôle (PS) et détermination de valeurs de paramètres de contrôle (PPW) pour les cellules de contrôle individuelles (PZ) conformément à des règles de contrôle (PR) prescrites pour la catégorie de zones de segment de contrôle (BK) respective,
- contrôle du contour (K) le long des zones de segment de contrôle individuelles (SB1, SB2, SB3, SB4, SB5, SB6, SB7, SB8, SB9, SB10, SB11, SB12, SB13) sur la base des valeurs de paramètres de contrôle (PPW) des cellules de contrôle (PZ) conformément aux règles de contrôle (PR) prescrites pour la catégorie de zones de segment de contrôle (BK) respective.

2. Procédé selon la revendication 1, **caractérisé en ce que** dans un premier temps, on détermine et analyse dans une image de contrôle de référence (RPB), laquelle montre un contour (K) correspondant au contour (K) à contrôler d'un objet test de référence (RO), un segment de contrôle de référence (RP5) adapté au contour (K), moyennant quoi on procède à la classification de zones de segment de contrôle (SB1, SB2, SB3, SB4, SB5, SB6, SB7, SB8, SB9, SB10, SB11, SB12, SB13) du segment de contrôle de référence (RPS) conformément à des règles de classification (KR) prescrites en catégories de zones de segment de contrôle (BK) définies,
et moyennant quoi il s'en suit, sur la base du segment de contrôle de référence (RPS), une détermination de zones de segment de contrôle du segment de contrôle (PS) à l'intérieur de l'image de contrôle (PB) et/ou sur la base d'une structure de cellules de contrôle de référence (RZS1,RZS2,RZS3,RZS3,RZS4,RZS5,RZS6,RZS7,RZS8. RZS9) définie le long d'une zone de segment de contrôle (SB1, SB2, SB3, SB4, SB5, SB6, SB7, SB8. SB9, SB10, SB11, SB12, SB13) du segment de contrôle de référence (RPS), une définition d'une structure de cellules de contrôle (ZS1, ZS2, ZS3, ZS4, ZS5, ZS6, ZS7, ZS8, ZS9) le long d'une zone de segment de contrôle (SB1, SB2, SB3, SB4, SB5, SB6, SB7, SB8, SB9, SB10, SB11, SB12, SB13) du segment de contrôle (PS) d'un contour (K) à contrôler actuellement.

3. Procédé selon la revendication 2, **caractérisé en ce que** l'on détermine, sur la base de valeurs de paramètres de contrôle (PPW) de cellules de contrôle (PZ) de la structure de cellules de contrôle de référence (RZS1, RZS2, RZS3, RZS4, RZS5, RZS6, RZS7, RZS8, RZS9), des valeurs de référence (RW) pour un contrôle ultérieur d'un contour (K) d'objets test.

4. Procédé selon l'une des revendications 1 à 3, **caractérisé en ce que**, pour la détermination automatique d'un segment de contrôle ou d'un segment de contrôle de référence (RPS), on extrait un contour (K) d'un objet test ou d'un objet test de référence (RO) de l'image de contrôle ou de l'image de contrôle de référence (RPB), et **en ce que** l'on fractionne ce contour (K) en segments de contour (KA1, KA2, KA3, KA4, KA5, KA6, KA7, KA8, KA9) avec des caractéristiques distinctives définies.

5. Procédé selon la revendication 4, **caractérisé en ce que**, pour fractionner le contour (K) en segments de contour (KA1, KA2, KA3, KA4, KA5, KA6, KA7, KA8, KA9) avec des caractéristiques distinctives définies, on effectue tout d'abord une approximation du contour (K) grâce à un tracé polygonal avec un procédé d'approximation en polygone et **en ce que** dans une autre étape d'approximation, on effectue ensuite l'approximation de segments de polygone individuels du tracé polygonal pour former des parties de segment de contrôle respectivement sur un segment de contour (K) associé à l'un des segments de polygone concerné.

6. Procédé selon l'une des revendications précédentes, **caractérisé en ce que** la définition d'une structure de cellules de contrôle (ZS6. ZS7, ZS8) ou d'une structure de cellules de contrôle de référence (RZS6, RZS7, RZS8) s'effectue au niveau d'une zone de transition entre deux parties de segment de contrôle (SB11, SB13) successifs le long du contour dont les extrémités se faisant face ne se touchent pas, au moins partiellement le long d'une ligne de liaison entre les extrémités respectives des deux parties de segment de contrôle (SB11, SB13).

7. Procédé selon l'une des revendications précédentes, **caractérisé en ce que**, pour une classification de zones de segment de contrôle (SB1, SB2, SB3, SB4, SB5, SB6, SB7, SB8, SB9, SB10, SB11, SB12, SB13), au moins une partie des catégories de zones de segment de contrôle suivantes est prescrite :
- une première catégorie de zones de segment de contrôle pour des parties de segment de contrôle (SB1, SB8, SB11, SB13) rectilignes et des parties de segment de contrôle courbes, dont le rayon est supérieur ou égal à un rayon limite prescrit,
- une deuxième catégorie de zones de segment de contrôle pour des parties de segment de contrôle (SB3, SB7) courbes, dont le rayon est inférieur ou égal à un rayon limite prescrit,
- une troisième catégorie de zones de segment de contrôle pour des parties de segment de contrôle (SB4, SB5, SB7) dont la longueur est inférieure ou égale à une longueur limite prescrite,
- une quatrième catégorie de zones de segment de contrôle pour des zones de segment de contrôle (SB9) au niveau desquelles deux parties de segment de contrôle (SB9, SB10) se rencontrent en formant un angle aigu (α), dont la valeur est inférieure ou égale à un angle limite prescrit,
- une cinquième catégorie de zones de segment de contrôle pour des zones de segment de contrôle (SB12) dans une zone de transition entre deux parties de segment de contrôle (SB11, SB13) se succédant le long du contour, dont les extrémités se faisant face présentent un écartement (a) entre elles, lequel est supérieur ou égal à un écartement limite prescrit.

8. Procédé selon l'une des revendications précédentes, **caractérisé en ce que**, pour des zones de segment de contrôle (SB1, SB8, SB9, SB11, SB13) d'au moins l'une des catégories de plage de contrôle, il s'en suit une définition automatique d'une structure de cellules de contrôle (ZS1) conformément à une première règle de structuration de cellules de contrôle
et **en ce que** pour des zones de segment de contrôle (SB2, SB3, SB4, SB5, SB6, SB7, SB10, SB11, SB12) d'au moins une autre des catégories de plage de contrôle, il s'en suit une définition automatique et/ou manuelle d'une structure de cellules de contrôle (ZS2, ZS3, ZS4, ZS5, ZS6, ZS7, ZS8, ZS9) conformément au moins à une deuxième règle de structuration de cellules de contrôle.

9. Procédé selon l'une des revendications précédentes, **caractérisé en ce qu'**une cellule de contrôle (PZ) se trouvant à une extrémité d'une partie de segment de contrôle (SB1) est définiee de manière à ce que l'extrémité en question de la partie de segment de contrôle (SB1) repose sur un bord de la cellule de contrôle (PZ).

10. Procédé selon l'une des revendications précédentes, **caractérisé en ce qu'**au niveau de deux zones de segment de contrôle (SB5, SB6, SB7, SB8, SB9, SB10, SB11, SB12, SB13) contigües ou se superposant le long du segment de contrôle, la structure des cellules de contrôle (ZS4, ZS5, ZS6, ZS7, ZS8, ZS9) et/ou la structure des cellules de contrôle de référence (RZS4, RZS5, RZS6, RZS7, RZS8, RZS9) d'au moins l'une des zones de segment de contrôle (SB6, SB9, SB12) est définie de manière à ce qu'elle recouvre au moins partiellement l'autre zone de segment de contrôle (SB5, SB7, SB8, SB90, SB11, SB12).

11. Procédé selon l'une des revendications précédentes, **caractérisé en ce que** les cellules de contrôle (PZ) présentent respectivement une forme essentiellement circulaire ou une forme polygonale convexe semblable à un cercle avec au moins cinq angles.

12. Système de contrôle (1) pour le contrôle optique d'un contour d'un objet test, avec
- une unité de capteur d'image (2) pour la prise d'une image de contrôle (PB, RPB) d'un objet test (O, RO), laquelle image montre au moins le contour (K) à contrôler,
- une unité de détermination de segment de contrôle (23) pour déterminer un segment de contrôle (PS) adapté au contour (K) à l'intérieur de l'image de contrôle, le segment de contrôle (PS) comprenant un certain nombre de zones de segment de contrôle (SB1, SB2, SB3, SB4, SB5, SB6, SB7, SB8, SB9, SB10, SB11, SB12, SB13) qui sont classées respectivement selon des catégories de zones de segment de contrôle (BK) définies selon des règles de classification (KR) prescrites,
- une unité de mémoire (15), dans laquelle on dépose des règles de contrôle (PR) pour différentes catégories de zones de segment de contrôle,
- une unité de détermination de cellules de contrôle (25) pour la définition d'une structure de cellules de contrôle (ZS1, ZS2, ZS3, ZS4, ZS5, ZS6, ZS7, ZS8, ZS9) respective se composant d'un certain nombre de cellules de contrôle (PZ) le long des zones de segment de contrôle (SB1, SB2, SB3, SB4, SB5, SB6, SB7, SB8, SB9, SB10, SB11, SB12, SB13) du segment de contrôle (PS) et pour la détermination de valeurs de paramètres de contrôle (PPW) pour les cellules de contrôle (PZ) individuelles conformément à des règles de contrôle (PR) prescrites pour la catégorie de zones de segment de contrôle (BK) respective,
- une unité de contrôle (27) pour contrôler le contour (K) le long des zones de segment de contrôle individuelles (SB1, SB2, SB3, SB4, SB5, SB6, SB7, SB8, SB9, SB10, SB11, SB12, SB13) sur la base des valeurs de paramètres de contrôle (PPW) des cellules de contrôle (PZ) conformément à des règles de contrôle (PR) prescrites pour la catégorie de zones de segment de contrôle (BK) prescrite,
- une unité de sortie (28) pour faire sortir un résultat de contrôle.

13. Système de contrôle selon la revendication 14, **caractérisé par**
- une unité de mémoire (15) dans laquelle des règles de classification (KR) pour différentes catégories de zones de segment de contrôle sont déposées,
- et une unité de classification de segment de contrôle (24) pour analyser un segment de contrôle (PS) adapté au contour (K) en classant ce faisant des zones de segment de contrôle (SB1, SB2, SB3, SB4, SB5, SB6, SB7, SB8, SB9, SB10, SB11, SB12, SB13) du segment de contrôle (PS) conformément à des règles de classification (KR) prescrites en catégories de zones de segment de contrôle (BK) définies.

14. Système de contrôle selon la revendication 13 ou 14, **caractérisé par**
- une unité de mémoire (15) pour enregistrer une zone de segment de contrôle d'un segment de contrôle de référence (RPS) et/ou d'une structure de cellules de contrôle de référence (RZS) à l'aide d'une image de contrôle de référence (RPB), laquelle montre un contour correspondant au contour à contrôler (K) d'un objet test de référence (RO),
- une unité de détermination de segment de contrôle (23), laquelle est réalisée de manière à pouvoir déterminer, sur la base d'un segment de contrôle de référence (RPS), un segment de contrôle (PS) pour un contour à contrôler (K) à l'intérieur de l'image de contrôle (RPB),
- une unité de détermination de cellules de contrôle (25), laquelle est réalisée de manière à déterminer, sur la base d'une structure de cellules de contrôle de référence définie le long d'une zone de segment de contrôle (SB1, SB2, SB3, SB4, SB5, SB6, SB7, SB8, SB9, SB10, SB11, SB12, SB13) du segment de contrôle de référence (RPS), une structure de cellules de contrôle (ZS1, ZS2, ZS3, ZS4, ZS5, ZS6, ZS7, ZS8, ZS9) le long d'une zone de segment de référence (SB1, SB2, SB3, SB4, SB5, SB6, SB7, SB8, S89, SB10, SB11, SB1,2, SB13) du segment de référence (PS) pour un contour (K) à contrôler actuellement.

15. Produit de programme informatique, lequel peut être directement chargé dans une mémoire d'une unité informatique programmable (10) d'un système de contrôle (1), avec des moyens de codes de programme afin de mettre en oeuvre toutes les étapes d'un procédé selon l'une des revendications 1 à 11 lorsque le programme est exécuté sur l'unité informatique (10).
